Europäisches Patentamt

European Patent Office

Office européen des brevets

(19)

(11) **EP 0 786 708 B1**

(12) **EUROPÄISCHE PATENTSCHRIFT**

(45) Veröffentlichungstag und Bekanntmachung des Hinweises auf die Patenterteilung:
**11.09.2002 Patentblatt 2002/37**

(51) Int Cl.⁷: **G05B 13/02**, G05B 11/42

(21) Anmeldenummer: **96119995.7**

(22) Anmeldetag: **12.12.1996**

(54) **Fuzzy-Regler bzw. Verfahren zum Abstimmen der Reglerparameter eines Reglers sowie Regler und Verfahren zum Regeln einer Regelstrecke**

Fuzzy logic controller and method for tuning the controlling parameters of the controller and controller and method for controlling a control loop

Contrôleur flou et procédé pour l'ajustage des paramètres de commande d'un contrôleur et contrôleur et procédé pour régler un circuit de contrôle

(84) Benannte Vertragsstaaten:
**CH DE ES FR GB IT LI NL**

(30) Priorität: **24.01.1996 DE 19602454**

(43) Veröffentlichungstag der Anmeldung:
**30.07.1997 Patentblatt 1997/31**

(73) Patentinhaber: **AGIE SA**
**6616 Losone (CH)**

(72) Erfinder: **Monleone, Riccardo, Ing. el. ETH**
**6962 Viganello (CH)**

(74) Vertreter: **Turi, Michael, Dipl.-Phys. et al**
**Samson & Partner**
**Widenmayerstrasse 5**
**80538 München (DE)**

(56) Entgegenhaltungen:
**EP-A- 0 241 286          US-A- 5 213 077**
**US-A- 5 363 023**

- **JOURNAL A, Bd. 36, Nr. 3, 1.Oktober 1995, Seiten 4-10, 12 - 14, XP000541967 KAYMAK U ET AL: "FUZZY CONTROL - THEORY AND DESIGN"**
- **PROCEEDINGS OF THE CONFERENCE ON FUZZY SYSTEMS, ORLANDO, JUNE 26 - 29, 1994, Bd. 1, 26.Juni 1994, INSTITUTE OF ELECTRICAL AND ELECTRONICS ENGINEERS, Seiten 22-29, XP000529231 XU J -X ET AL: "COMBINED ADAPTIVE AND FUZZY CONTROL USING MULTIPLE MODELS"**

## Beschreibung

Die Erfindung betrifft ein Verfahren gemäß dem Oberbegriff des Anspruchs 1.

Die Erfindung betrifft weiterhin eine Fuzzy-Abstimmungseinheit gemäß dem Oberbegriff des Anspruchs 31.

Aus dem Journal A, Bd. 36, Nr. 3, 1 Oktober 1995, S. 4-14, Kaymak et al. "Fuzzy Control-Theory and Design" sowie der US-5,213,077 A sind eine Fuzzy-Abstimmungseinheit sowie ein entsprechenden Verfahren der eingangs genannten Art bekannt.

Aus der EP-0 241 286 B1 ist eine weitere Fuzzy-Abstimmungseinheit bzw Fuzzy-Regler sowie ein entsprechendes Verfahren bekannt. Die bekannten Fuzzy-Regler berechnen die Differenz aus der gemessenen Regelgröße der zu regelnden Regelstrecke und der dem Regler aufgeprägten Führungsgröße in Form einer Fehlersignalwellenform. Aus der Fehlersignalwellenform leiten die Fuzzy-Regler charakteristische Variablen ab, die sie anschließend dem Abstimmen der Reglerparameter zugrundelegen. Der Nachteil diese Fuzzy-Regler liegt darin, daß technische bzw. technologisch bedingte Grenzen der Regelstrecke (z.B. ein elektrischer Antrieb mit vorgeschalteter Treiberstufe) nicht berücksichtigt werden. Als Folge davon können die auf die genannte Art abgestimmten Reglerparametern zu einem unerwünschten nichtlinearen Verhalten des abgestimmten Reglers führen.

Die Erfindung möchte hier Abhilfe schaffen.

Die Erfindung erreicht dieses Ziel jeweils durch die Gegenstände der Ansprüche 1 31. Weitere Ausgestaltungen der Erfindung sind in den Unteransprüchen 2-30 und 32-43 beschrieben.

Nach Anspruch 1 wird bei einem gattungsgemäßen Verfahren der wenigstens eine Reglerparameter mittels wenigstens einer in der Fuzzy-Abstimmungseinheit bzw. Fuzzy-Regler aufgestellten Regelbasis darauf abgestimmt, daß während des zugeführten Führungsgroßenverlaufs außerhalb einer etwaigen Phase des Übersteuerung der Regelstrecke diese immer im linearen Bereich durchfahren wird.

Der abzustimmende Regler weist vorzugsweise ein Lage- (als Proportionalreglerglied), ein Geschwindigkeits- (als Differenzierreglerglied) und ein Integralreglerglied auf und wird nachfolgend als PIV-Regler bezeichnet. In speziellen Ausführungsformen kann der abzustimmende Regler nur ein einziges Reglerglied, ein Paar oder mehrere Reglerglieder oder zusätzlich zu den aufgezählten Reglertypen auch andere Reglerglieder enthalten, beispielsweise ein Verzögerungsund/oder ein Totzeitglied. Die einzelnen Reglerglieder weisen üblicherweise einen oder mehrere Reglerparameter auf, anhand derer das Regelverhalten des jeweiligen Reglergliedes festgelegt werden kann. Ein Regler erhält an seinem Eingang Eingangsgrößen, üblicherweise die vorgegebene Führüngsgröße und die (gemessene) Regelgröße, und leitet aus diesen Eingangsgrößen eine Stellgröße ab, die er über seinen Ausgang als Ausgangsgröße an eine nachgeschaltete Regelstrecke ausgibt. Der Regler kann hierbei analog oder digital aufgebaut sein. Handelt es sich um einen digitalen Aufbau, so soll unter einem Führungsgrößenverlauf im wesentlichen zeitlich aufeinanderfolgende Führungsgrößenwerte verstanden werden, die entweder kontinuierlich oder in diskreten Zeitabständen (z.B. im Takt einer Maschinensteuerung (z.B. eine CNC), bei welcher das erfindungsgemäße Verfahren vorzugsweise eingesetzt wird) an den Eingang des Reglers gegeben werden. Der PIV-Regler samt Regelstrecke wird nachfolgend auch als Regelsystem bezeichnet, das ein charakteristisches Regelverhalten zeigt.

Unter einem Fuzzy-Regler ist ein Regler zu verstehen, der seine Stellgröße(n) mittels auf sog. Fuzzy-Logik basierenden Berechnungen aus der Regelgröße und der Führungsgröße ableitet. Insgesamt liegen also zwei Regelkreise vor, wobei der erste Regelkreis aus dem abzustimmenden PIV-Regler und einer gegebenen Regelstrecke und der zweite Regelkreis aus dem Fuzzy-Regler besteht, dessen Regelstrecke im wesentlichen aus dem PIV-Regler und dessen Regelstrecke besteht.

Bevorzugt ist in der Regelstrecke des PIV-Reglers ein elektrischer oder hydraulischer Antrieb enthalten, der beispielsweise eine mechanische Einheit antreibt (z.B. einen Führungskopf einer Elektroerosionsmaschine). Nachfolgend soll auch eine für einen elektrischen Antrieb ggf. erforderliche Treiberstufe zur Regelstrecke gezählt werden.

Der Vorteil des erfindungsgemäßen Abstimmverfahrens liegt darin, daß für jeden auf den PIV-Regler gegebenen Führungsgrößenverlauf die an die Regelstrecke ausgegebenen Stellgrößenwerte so bemessen sind, daß die Regelstrecke unter Berücksichtigung ihrer technischen Grenzen immer im linearen Bereich durchfahren wird. Dabei kann die Regelstrecke im Bereich ihrer technischen Grenzen betrieben werden, ohne daß das Regelsystem ein nichtlineares Regelverhalten zeigt. Das erfindungsgemäße Abstimmverfahren erlaubt somit z.B. die Verwendung kostengünstiger Treiberstufen (Servo-Verstärker) zum Ansteuern des elektrischen Antriebes, da nichtlineare Effekte, wie Sättigung, Strombegrenzungen etc. der Treiberstufe erst gar nicht auftreten. Diese Treiberstufen können also voll ausgelastet werden, was vorteilhaft gegenüber der Verwendung teurer, nicht voll auslastbarer Treiberstufen ist, die immer einen Sicherheitsbereich aufweisen müssen. Vorteilhaft kann das Regelsystem, das über das erfindungsgemäße Verfahren abgestimmte wurde, dank seines nunmehr im wesentlichen linearen Regelverhaltens in Mehrachsensystemen, in der Robotnik, für Präzessionsbearbeitungen etc. eingesetzt werden.

Der Vorteil der Verwendung eines Fuzzy-Reglers zum Abstimmen der Reglerparameter liegt in seiner Robustheit, seiner Einsatzmöglichkeit für sehr komplizierte und daher kaum simulierbare Regelsysteme und in seiner unkomplizierten, "intuitiven" Programmierbarkeit, basierend auf einzelnen an menschliche Denkmechanismen angepaßte Regeln. Die hohe Robustheit resultiert aus einem weitestgehend nichtlinearem Regelverhalten, daß zwar für die andauernde Regelung eines Antriebssystems Nachteile ergeben kann, für die hier vorgeschlagene Abstimmung der Reglerparameter allerdings Konvergenzprobleme minimiert.

Bevorzugt werden erst die Reglerparameter des Geschwindigkeits- und des Lagereglergliedes und anschließend der Reglerparameter des Integralreglergliedes des Reglers abgestimmt. Insbesondere das Geschwindigkeitsreglerglied bestimmt die Reaktionszeit des Regelsystems, während das Integralreglerglied hauptsächlich zum Überwinden von statischer und/oder dynamischer Reibung verwendet wird. Daher ist es zum Erzielen kurzer Reaktionszeiten von großer Bedeutung, den Reglerparameter des Geschwindigkeitsreglergliedes so genau wie möglich abzustimmen. Dies erfolgt hier vorteilhaft durch die im wesentlichen unabhängige Abstimmung der Reglerglieder. Eine völlig getrennte Abstimmung aller drei Reglerglieder ist aber weniger bevorzugt, da insbesondere das Lage- und das Geschwindigkeitsreglerglied sich stark gegenseitig beeinflussen.

Bevorzugt werden die Reglerparameter des Lage- und des Geschwindigkeitreglergliedes des Reglers erst mittels einer ersten Regelbasis ohne Berücksichtigung der technischen Grenzen der Regelstrecke, insbesondere eines Treibers, (sondern lediglich unter Berücksichtigung eines gewünschten (Modell-)Regelverhaltens) abgestimmt und anschließend mittels einer zweiten Regelbasis an diese technischen Grenzen angepaßt. Hiermit können vorteilhaft erst allgemeine (Modell-)Regelverhalten des Regelsystems in der ersten Regelbasis und die spezielle Anpassung des allgemeinen Regelverhaltens an die technische Belastbarkeit der Regelstrecke erst in der zweiten Regelbasis berücksichtigt werden, was vorallem die Programmierung erleichtert.

Bevorzugt werden physikalische Größen bzw. Systemgrößen aus der Regel- und/oder der Stellgröße als Eingangsgrößen für einzelne oder alle Regelbasen des Fuzzy-Reglers abgeleitet. Physikalische Größen sollen hierbei bestimmte Zeiten, Amplitudenwerte o.ä. sein. Mit diesen Größen läßt sich das Regelverhalten vorteilhaft auf einfache Art beschreiben, da diese Größen auch das Regelverhalten eines Regelsystems allgemein beschreiben. Hierzu gehören z.B. die Reaktionszeit, gewisse Überschwingwerte der Ist-Position über die Soll-Position, Empfindlichkeiten des Regelsystems auf Änderungen der Istgröße und/oder Rauschwerte des Regelsystems im Stillstand. So lassen sich auch die Fuzzy-Regeln auf ihrer Grundlage vergleichsweise einfach programmieren, da der Programmierer das Regelverhalten unmittelbar mittels dieser das Regelverhalten kennzeichneten Größen bewerten und entsprechende Regeln für die Änderungen der Reglerparameter erstellen kann.

Bevorzugt werden als Eingangsgrößen des Fuzzy-Reglers aus der Regelgröße des Reglers abgeleitet: eine erste Zeit bis zum Erreichen eines Extremwertes, insbesondere des ersten Maximums, der Regelgröße; ein erster Überschwingwert, der mit dem Wert dieses Extremwertes und/oder wenigstens einem nachfolgenden Extremwert der Regelgröße korreliert ist; eine zweite Zeit bis zum Verbleib der Regelgröße innerhalb vorgegebener, insbesondere an den Führungsgrößenverlauf gekoppelter Schranken; und ein (logischer) Wert zur Angabe, ob ein Überschwingen der Regelgröße über die Führungsgröße stattgefunden hat (gibt somit an, ob die Regelgröße ein aperiodisches Schwingverhalten zeigt). Ferner wird aus der Stellgröße des Reglers abgeleitet: ein Extremwert, eine maximale zeitliche Änderung und eine Art Rauschwert der Stellgröße. Die Art Rauschwert gibt beispielsweise die im Stillstand des Regelsystems gemessene maximale Amplitude von Stillstands-Oszillationen o.ä. an; in gewissen Fällen kann auch der Frequenzinhalt (Frequenz mit der größten Leistungsdichte) des Rauschens aus dem gemessenen Positionsverlauf abgeleitet und als eine Art Rauschwert verwendet werden. Mit den genannten physikalischen Größen läßt sich das Regelverhalten des Regelsystems besonders einfach beschreiben. So ist insbesondere die zweite Zeit ein Maß dafür, wie lange das Regelsystem benötigt, bis es die neue Soll-Position (Führungsgröße) innerhalb vorgegebener Grenzwerte erreicht hat. Diese zweite Zeit soll nachfolgend auch Stillstand-Zeit genannt werden.

Bevorzugt werden solange verschiedene Führungsgrößenverläufe in nacheinander erfolgenden Abstimmdurchgängen dem Abstimmen zugrundegelegt, bis bei einem bestimmten Führungsgrößenverlauf - nachfolgend maximaler Führungsgrößenverlauf genannt - folgende Kriterien erfüllt sind: die technischen Grenzen der Regelstrecke sind erreicht worden und/oder das Regelverhalten entspricht einem vorgegebenen Modell (d.h., die gemessenen physikalischen Größen entsprechen vorgegebenen gewünschten Werten, z.B. erreicht die maximale zeitliche Änderung der Stellgröße einen vorgegebenen Maximalwert). Nachfolgend sollen folgende Begriffe für das Abstimmen verwendet werden: ein Abstimmvorgang ist das einmalige Abstimmen aller Reglerparameter (der PIV-Regler wird für diesen Zweck vorzugsweise von der CNC entkoppelt, vgl. unten, oder läuft im Multitask-Modus quasi parallel mit der CNC), ein Abstimmdurchgang ist das abschließende Abstimmen eines oder mehrerer Reglerparameter(s) für einen bestimmten Führungsgrößenverlauf, ein Abstimmzyklus ist das einmalige Ermitteln eines Korrekturwertes für einen oder mehrere Reglerparameter bzw. eines oder mehrerer Werte(s) für den/die Reglerparameter als Reaktion auf das Durchlaufen eines Führungsgrößenverlaufes und die abschließende Bewertung des Regelverhaltens durch den Fuzzy-Regler. Mit og. Maßnahme muß der Programmierer vorteilhaft die Linearitätsgrenzen (d.h., die technischen Maximalwerte für die Regelstrecke, wie die Maximalgeschwindigkeit bzw. -beschleunigung eines elektromotorisch angetriebenen Achsensystems etc.), sowie das gewünschte (Modell-)Regelverhalten des geschlossenen Regelsystems über bestimmte physikalische Größen (z.B. Einschwingzeit, Überschwingen usw.) eingeben, während die Abstimmung automatisch das Regelverhalten bis hin zu diesem extremen Verhalten der Regelstrecke berücksichtigt und die Reglerparameter entsprechend abstimmt.

Bevorzugt werden, insbesondere für die Abstimmung des Lage- und Geschwindigkeitsreglergliedes, zwei Führungsgrößenverläufe derart stufenförmig für den Abstimmvorgang ausgewählt, daß die erste Stufenhöhe zu einem bestimmten hohen Anteil und die zweite Stufenhöhe zu einem bestimmten niedrigen Anteil die Kriterien für den maximalen Führungsgrößenverlauf erfüllt. Mit dieser Maßnahme wird der Abstimmvorgang vorteilhaft beschleunigt, da vorzugsweise nur zwei Abstimmdurchgänge benötigt werden. Die Auswahl der Stufenhöhe kann dabei durch den Programmierer in Kenntnis der Zusammenhänge zwischen der maximal aufgeprägbaren Stufenhöhe und der entsprechenden maximalen technischen Belastung der Regelstrecke erfolgen.

Bevorzugt werden die Reglerparameter derart abgestimmt, daß der Extremwert und die maximale zeitliche Änderung der Stellgröße die vorgegebenen Maximalwerte nicht überschreitet, der (logische) Wert ein Überschwingen der Regelgröße über die Führungsgröße angibt (d.h., daß kein aperiodischer Grenzfall vorliegt) und/oder die erste Zeit bis zum Erreichen des Extremwerts der Regelgröße, der erste Überschwingwert, die zweite Zeit bis zum Verbleib der Regelgröße innerhalb vorgegebener Schranken sowie der Rauschwert der Stellgröße minimal werden. Mit diesen Abstimmbedingungen kann der Programmierer die einzelnen Fuzzy-Regeln des Fuzzy-Reglers vorteilhaft für das Regelverhalten des Reglers besonders anschaulich aufstellen und eine entsprechende Bewertung der Reglerparameter vornehmen. Beispielsweise kann eine Fuzzy-Regel so aussehen, daß sie die Reglerparameter reduziert für den Fall, daß der Extremwert der Stellgröße ein Überschreiten der technischen Grenzen der Regelstrecke angibt.

Bevorzugt wird der Überschwingwert aus dem ersten Maximum und dem ersten Minimum der Regelgröße abgeleitet, insbesondere nach folgender Formel: Überschwingwert = 1+(normierte Höhe des ersten Maximums - normierte Höhe des ersten Minimums)/2. Danach wird vorteilhaft auch ein Schwingverhalten des Regelsystem berücksichtigt, daß sich durch ein leichtes Überschwingen der Regelgröße über die Führungsgröße, jedoch durch ein nachteiliges zu starkes nachfolgendes Unterschwingen aufgrund eines zu starken Bremsvorganges auszeichnet. In diesem Fall können die Reglerparameter dann entsprechend geändert werden.

Bevorzugt wird beim Abstimmen des Reglerparameters des Integralreglers ein zweistufiger Führungsgrößenverlauf, insbesondere ein zweistufiger Lageverlauf für einen Antrieb, gewählt. Das Integralreglerglied hat üblicherweise die Aufgabe, die dynamische und/oder die statische Reibung zu kompensieren. Die statische Reibung kann sich abhängig von bestimmten Ausgangsbedingungen für die Regelstrecke unterschiedlich auswirken. So müssen insbesondere für Regelstrecken, deren Antrieb beispielsweise eine umfangreichere nachgeschaltete Mechanik aufweist, wie ein Spindelantrieb, etc., folgende Fälle unterschieden werden. Die Mechanik ist in einem ersten Fall durch das Antreiben in eine bestimmte Antriebsrichtung bereits in diese Antriebsrichtung vorgespannt, so daß ein erneutes Antreiben in dieselbe Richtung eine geringere Antriebskraft erfordert, als das Antreiben in die entgegengesetzte Richtung, da die Reibung reduziert ist. Dies kann mit dem bevorzugten Abstimmverfahren mittels eines zweistufigen Führungsgrößenverlaufes vorteilhaft berücksichtigt werden, da beide Fälle - kein Richtungswechsel von der ersten zur zweiten Stufe, aber ein Richtungswechsel von der zweiten zur ersten Stufe, falls der Antrieb wieder in die Ausgangsposition zurückgefahren wird - in dem Abstimmvorgang enthalten sind. So läßt sich beispielsweise ein guter Kompromiß für das Regelverhalten in beiden Fällen - Richtungswechsel oder nicht - finden.

Bevorzugt werden als Eingangsgrößen des Fuzzy-Reglers, insbesondere für das Abstimmen des Reglerparameters des Integralreglergliedes, abgeleitet aus der Regelgröße des Reglers: eine dritte Zeit bis zum Verbleib der Regelgröße innerhalb vorgegebener, an die erste Stufe des Führungsgrößenverlaufes gekoppelter Schranken, eine vierte Zeit bis zum Verbleib der Regelgröße innerhalb vorgegebener, an die zweite Stufe des Führungsgrößenverlaufes gekoppelter Schranken, ein zweiter Überschwingwert, der mit dem Wert des ersten Extremwerts und/oder nachfolgender Extremwerte. der Regelgröße während der ersten Stufe des Führungsgrößenverlaufes korreliert ist und ein dritter Überschwingwert, der mit dem Wert des ersten Extremwerts und/oder nachfolgender Extremwerte der Regelgröße während der zweiten Stufe des Führungsgrößenverlaufes korreliert ist Auch mit diesen Abstimmbedingungen kann der Programmierer die einzelnen Fuzzy-Regeln des Fuzzy-Reglers insbesondere für die Abstimmung des Integralreglers unter Berücksichtigung der beiden oben genannten Fälle statischer Reibung vorteilhaft besonders anschaulich aufstellen und eine entsprechende Bewertung der Reglerparameter vornehmen.

Bevorzugt werden die Reglerparameter des Integralreglers derart abgestimmt, daß die dritte und die vierte Zeit in etwa gleich lang werden und/oder der zweite und der dritte Überschwingwert minimal werden. Mit der ersten Abstimmbedingung erreicht man - wie oben erwähnt - vorteilhaft ein gleiches Regelverhalten in den beiden genannten Fällen statischer Reibung. Mit der zweiten Abstimmbedingung wird verhindert, daß der Einfluß des Integralreglergliedes zu stark wird und ein zu starkes Überschwingen der Regelgröße über die Führungsgröße verursacht. Unter einem Überschwingen soll immer das Überschwingen der betragsmäßigen Soll-Positionsänderung bzw. Führungsgrößenänderung zu der betragsmäßigen Regel-Positionänderung verstanden werden, was somit unabhängig von der Richtung der Positionsverschiebung entlang einer Koordinatenachse ist. Dies gilt selbstverständlich auch für skalare Regelgrößen, wie Temperatur- oder Druckmessungen etc., die ebenfalls über den PIV-Regler samt Regelstrecke geregelt werden können.

Bevorzugt werden die abzustimmenden Regelparameter zu Beginn des Abstimmvorganges auf Werte gesetzt, die gerade so hoch sind, daß die Regelstrecke auf bestimmte äußere Einflüsse reagieren kann, insbesondere ein Antrieb in der Regelstrecke ev. auf den Antrieb wirkende Kräfte kompensieren kann.

Bevorzugt sind für einen in der Regelstrecke enthaltenen Antrieb Mittel zur Lageerfassung des Antriebes und/ oder Mittel zur Lageerfassung der vom Antrieb angetriebenen mechanischen Einheit, insbesondere einer Spindel, vorgesehen, wobei diese Mittel zum Bereitstellen der Regelgröße ausgelegt sind. Mit der ersten Alternative kann vorteilhaft das Mittel zur Lageerfassung auch zum Erfassen der Regelgröße verwendet werden, daß beispielsweise bereits für einen elektrischen Antrieb (bürstenloser Motor) zur Steuerung der einzelnen Stromphasen für die Wicklungen des Motors vorgesehen ist.

Bevorzugt ist der Regler durch eine Oversamplingeinrichtung zum Erzielen eines n-fachen Oversampling der dem Regler zugeführten Führungsgröße gekennzeichnet, wobei vorzugsweise das Lage- und/oder das Geschwindigkeitsreglerglied, ggf. weitere Lage- und/oder Geschwindigkeitsreglerglieder dem Integralreglerglied derart vorgeschaltet sind, daß die Akkumulation des Integralreglergliedes auf der Basis der Ausgangsgrößen des bzw. der vorgenannten Reglerglieder erfolgt. Dank der Oversamplingeinrichtung ist die Reaktionszeit des Regelsystems erhöht und der durch das Nachfahren der Regelstrecke in einem Mehrachsensystem verursachte Fehler reduziert.

Bevorzugt weist der Regler eine Anti-Übersättigungseinrichtung für das Integralreglerglied zum Vermeiden einer Übersteuerung der Regelstrecke auf, wobei die Anti-Übersättigungseinrichtung vorzugsweise derart ausgelegt ist, daß sie den Betrag der Stellgröße des Reglers mit einem vorgegebenen Maximalwert für die Regelstrecke vergleicht und im Falle des Überschreitens den Beitrag des Integralreglergliedes von der Stellgröße abzieht und/oder die letzte Akkumulation des Integralreglergliedes rückgängig macht. Die Anti-Übersättigungseinrichtung verhindert damit eine zu starke Akkumulation des Integralreglergliedes, das sonst einen zu großen Regelbeitrag liefern würde. Eine derartig große Akkumulation tritt insbesondere dann auf, wenn stufenförmige Führungsgrößenverläufe mit großen Stufenhöhen an den PIV-Regler gegeben werden, und kann dazu führen, daß die in der Regelstrecke enthaltene Treiberstufe in ihren Sättigungsbereich gelangt. Damit wird das Regelsystem nichtlinear und ggf. instabil.

Bevorzugt zeichnet sich der Regler durch eine Korrektureinrichtung zum Korrigieren der dem Eingang des Reglers zugeführten Regelgröße und/oder der Führungsgröße aus. Die Korrektureinrichtung dient zum Korrigieren mechanischer Ungenauigkeiten der Regelstrecke. Mechanische Ungenauigkeiten können beispielsweise durch ein Antriebslager, ein Riemengetriebe und/oder eine Spindel verursacht werden.

Bevorzugt wird der Fuzzy-Regler in einer Elektroerosionsvorrichtung zur Regelung synchronisierter Mehrachsensysteme verwendet. Der Regler bzw. der Fuzzy-Regler soll also in Mehrachsensystemen eingesetzt werden, wo eine vorhersagbare, lineare und gleichmäßig schnelle Antwort für jede Achse wünschenswert ist. Außerdem können sämtliche Fuzzy-Regler bzw. Regler für die Achsen eines Mehrachsensystems in demselben Digital-Rechner (Prozessor) implementiert sein, womit.vorteilhaft die dem Mehrachsensystem vorgeschaltete CNC entlastet wird (sie muß keine Interpolation der Mehrachsentrajektorien mehr durchführen, dies ermittelt der Regler selbstständig), eine kürzere Reaktionszeit für eine Achse bezüglich des Informationsflusses (Warnmeldungen, Fehlerberichte etc.) für die anderen Achsen und eine leicht verwirklichbare Korrektur für Fehler, die von sich schneidenden Achsen hervorgerufen werden. Ist der Regler vorteilhaft digital ausgebildet, d.h. in Form eines Algorithmus, so lassen sich leicht alle weiteren erforderlichen Funktionen für die Regelung eines Mehrachsensystems ausführen, z.B. eine Sicherheits-Überwachung der einzelnen Lagen und Geschwindigkeiten, Trajektorien-Interpolationen, Datenkommunikation mit der vorgeschalteten CNC o.ä., etc.. Die digitale hat gegenüber der analogen Ausbildung den Vorteil, daß sie nicht von Umweltbedingungen abhängt und weniger Probleme hinsichtlich Alters-, Drift und Kalibrierungserscheinungen zeigt.

Insbesondere für Elektroerosionsvorrichtungen werden kurze Reaktionszeiten des Regelsystems für ihre Führungssysteme gefordert, da die Abtastraten der CNC vergleichsweise hoch sind, um den Erosionsprozeß möglichst effektiv zu überwachen, steuern bzw. regeln zu können.

Weitere Vorteile und Ausgestaltungen der Erfindung ergeben sich aus der nachfolgenden Beschreibung bevorzugter Ausführungsbeispiele. In dieser Beschreibung wird auf die beigefügte schematische Zeichnung Bezug genommen.

In der Zeichnung zeigen:

Fig. 1     eine schematische Ansicht eines erfindungsgemäßen Fuzzy-Regler zum Abstimmen eines PIV-Reglers;

Fig. 2     schematisch ein Ausführungsbeispiel für einen in der Regelstrecke des PIV-Reglers enthaltenen Antrieb mit nachgeschalteter Mechanik;

Fig. 3     beispielhaft einen zeitlichen Verlauf der Stellund der Regelgröße sowie daraus abgeleitete physikalische Größen als Reaktion auf einen aufgeprägten zeitlichen Führungsgrößenverlauf;

Fig. 4     jeweils getrennt ein Ablaufdiagramm für den Abstimmvorgang der P- und V-Glieder sowie des I-Gliedes des PIV-Reglers;

Fig. 5     ein Ablaufdiagramm für einen Abbruchalgorithmus zum Angeben, wann die Reglerparameter des P- und des V-Reglergliedes ausreichend abgestimmt sind;

Fig. 6     ein Ablaufdiagramm für einen Abbruchalgorithmus zum Angeben, wann der Reglerparameter des I-Reglergliedes ausreichend abgestimmt sind;

Fig. 7      beispielhaft einen zeitlichen Verlauf der Regelgröße als Reaktion auf einen aufgeprägten stufenförmigen Führungsgrößenverlauf;

Fig. 8      beispielhaft einen zeitlichen Verlauf der Regelgröße als Reaktion auf einen aufgeprägten zweistufenförmigen Führungsgrößenverlauf zum Abstimmen des I-Reglergliedes;

Fig. 9      schematisch Regelbasen des erfindungsgemäßen Fuzzy-Reglers zum Abstimmen des P- und des V-Reglergliedes mit den entsprechenden aus der Regel-bzw. Stellgröße abgeleiteten physikalischen Größen;

Fig. 10     schematisch eine Regelbasis des erfindungsgemäßen Fuzzy-Reglers zum Abstimmen des I-Reglergliedes mit den entsprechenden aus der Regelgröße abgeleiteten physikalischen Größen;

Fig. 11     schematisch ein Ausführungsbeipiel eines erfindungsgemäßen Reglers;

Fig. 12     verschiedene Diagramme mit zeitlich aufeinanderfolgenden Ausgabewerte des PIV-Reglers, zum Illustrieren der Erhöhung der Genauigkeit des Signales an den D/A-Wandler.

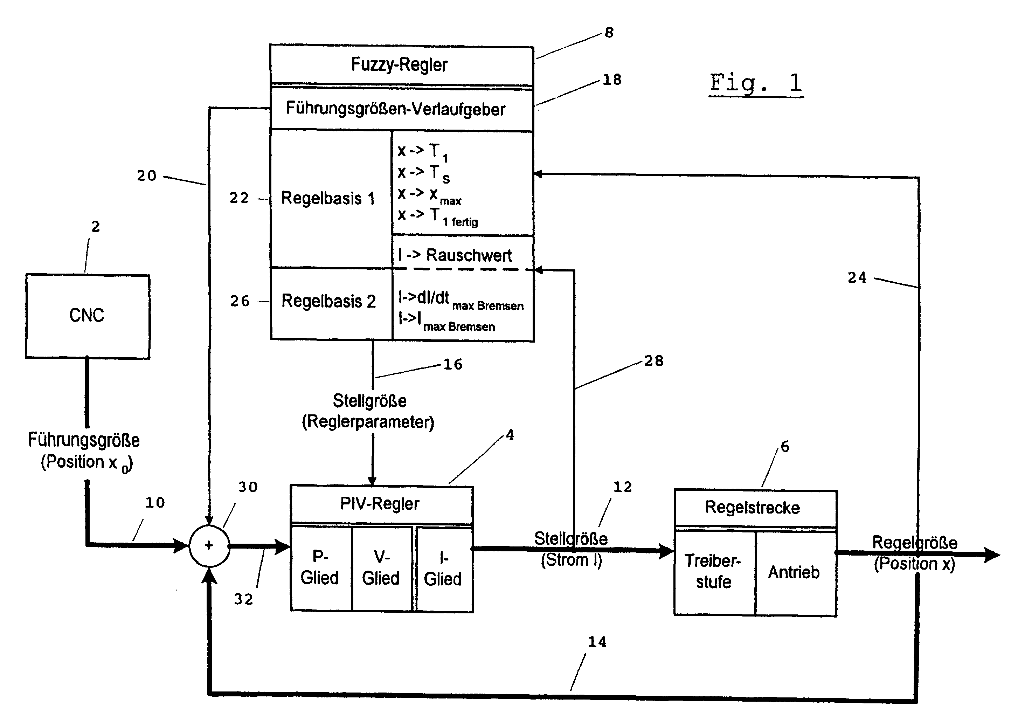

Fig. 1 zeigt eine schematische Ansicht eines aus einer numerischen Steuerung (CNC) 2, einem PIV-Regler 4 und einer Regelstrecke 6 bestehenden Regelsystems sowie einen Fuzzy-Reglers 8 zum Abstimmen der Reglerparameter des PIV-Reglers 4. Die CNC 2 ist mit ihrem Ausgang über eine Führungsgrößenverlauf-Verbindung 10 mit dem Eingang eines Summiergliedes 30 und über dessen Ausgang über eine Verbindung 32 mit dem Eingang des PIV-Reglers 6 verbunden und stellt dem PIV-Regler 4 - bzw. dem Summierglied 30 - somit über die "Verbindung" 10, 30 und 32 einen gewünschten Führungsgrößenverlauf bereit. Der PIV-Regler 4 ist mit seinem Ausgang über eine Stellgrößen-Verbindung 12 mit dem Eingang der Regelstrecke 6 verbunden und stellt der Regelstrecke 6 über diese Verbindung 12 die Stellgröße bereit. Die Regelstrecke 6 ist mit ihrem Ausgang über eine Regelgrößen-Verbindung 14 mit einem weiteren Eingang des Summiergliedes 30 und somit mit dem Eingang des PIV-Reglers 4 verbunden und stellt dem PIV-Regler 6 über die "Verbindung" 14, 30 und 32 und das Summierglied die Regelgröße bereit. Das Summierglied 30 ist in Fig. 1 lediglich symbolhaft miteingezeichnet, da die Differenzbildung (oder auch Summenbildung) aus der Führungsgröße und der Regelgröße auch direkt im PIV-Regler 4 erfolgen kann.

Der Fuzzy-Regler 8 ist zum Abstimmen der Reglerparameter des PIV-Reglers 4 mit seinem Ausgang über eine Fuzzystellgrößen-Verbindung 16 mit einem gesonderten Eingang des PIV-Reglers 4 verbunden. Über diese Fuzzystellgrößen-Verbindung 16 stellt der Fuzzy-Regler 8 dem PIV-Regler 4 die abgestimmten Reglerparameter bzw. Korrekturwerte für die Reglerparameter bereit.

Der Fuzzy-Regler 8 enthält einen Führungsgrößenverlaufgeber 18, dessen Ausgang über eine weitere Fuzzyführungsgrößenverlauf-Verbindung 20 mit dem Summierglied 30 und damit über die Verbindung 32 mit dem Eingang des PIV-Reglers 4 verbunden ist. Über die "Verbindung" 20, 30 und 32 stellt der Führungsgrößenverlaufgeber 18 dem PIV-Regler 4 einen Führungsgrößenverlauf bereit, der beispielsweise im Summierglied 30 auf den von der CNC 2 gelieferten Führungsgrößenverlauf addiert werden kann. Ferner enthält der Fuzzy-Regler 8 eine erste Regelbasis 22 mit Fuzzy-Regeln, deren fuzzifizierte Eingabewerte zum Teil aus der gemessen Regelgröße der Regelstrecke 6 abgeleitet werden. Hierzu ist der Eingang des Fuzzy-Reglers 8 über eine erste Verbindung 24 mit dem Ausgang der Regelstrecke 6 bzw. mit einer Abzweigung an der Regelgrößen-Verbindung 14 verbunden. Zusätzlich enthält der Fuzzy-Regler eine zweite Regelbasis 26 mit Fuzzy-Regeln, deren fuzzifizierte Eingabewerte aus der Stellgröße des PIV-Reglers 4 abgeleitet werden. Hierzu ist der Eingang des Fuzzy-Reglers 14 über eine zweite Verbindung 28 mit dem Ausgang des PIV-Reglers 6 bzw. mit einer Abzweigung an der Stellgrößen-Verbindung 12 verbunden. Die erste Regelbasis 22 erhält ebenfalls fuzzifizierte Eingabewerte, die aus der Stellgröße des PIV-Reglers 4 abgeleitet werden. Die über die erste 24 und die zweite Verbindung 28 an den Eingang des Fuzzy-Reglers 8 eingegebenen Werte können somit als zwei unterschiedliche Regelgrößen für den Fuzzy-Regler 8 betrachtet werden.

Der Fuzzy-Regler 8 erhält an seinem Eingang die Stellgröße des PIV-Reglers 4 und die Regelgröße der Regelstrecke 6. Aus diesen beiden Größen leitet er bestimmte physikalische Größen ab, die in Fig. 1 bereits angedeutet sind und weiter unten im Detail erläutert werden. Diese physikalischen Größen nimmt er als Eingabewerte, die er anschließend in Fuzzy-Eingaben fuzzifiziert. Die Fuzzy-Eingaben führt er bestimmten Fuzzy-Regeln zu und erhält dabei Fuzzy-Ausgaben, die er anschließend wieder in Ausgabewerte defuzzifiziert. Diese Ausgabewerte sind entweder abzustimmende Reglerparameter des PIV-Reglers 4 oder Korrekturwerte für diese Reglerparameter.

Der PIV-Regler 4 besteht aus einzelnen Lage-, Geschwindigkeits- und Integralreglergliedern, nachfolgend auch P-, V-und I-Reglerglieder genannt. Die Reglerparameter der einzelnen Reglerglieder können beispielsweise getrennt oder gemeinsam abgestimmt werden. Wie in dem in Fig. 1 gezeigten Ausführungsbeispiel durch die symbolische Trennung des P-und des V-Reglergliedes vom I-Reglerglied angedeutet, werden die Reglerparameter der P- und V-Reglerglieder gleichzeitig, jedoch getrennt voneinander von dem Reglerparameter des I-Reglergliedes abgestimmt. Eine solche getrennte Abstimmung bedeutet, daß in einem ersten Abstimmschritt die Reglerparameter der P- und V-Reglerglieder abgestimmt werden, während der Reglerparameter des I-Reglergliedes beispielsweise konstant gehalten wird. Anschließend werden in einem zweiten Abstimmschritt die Reglerparameter der P- und V-Regelglieder auf ihren abgestimmten Werten konstant gehalten und der Reglerparameter des I-Reglergliedes wird abgestimmt.

Die kritischsten Nichtlinearitäten in einem Regelkreis werden normalerweise durch die technischen Grenzen der Regelstrecke 6 verursacht. Die Regelstrecke 6 umfaßt beispielsweise eine Treiberstufe (z.B. einen 4-Quadrant-Treiber) für einen mit elektrischer Leistung zu versorgenden elektrischen Antrieb. Eine für die Regelstrecke 6 ideale Treiberstufe sollte unendliche Ströme liefern können. Reale Treiberstufen haben sind jedoch durch einen maximal erzeugbaren Strom begrenzt, der vorallem von ihren Ausgangstransistoren (MOSFET's, IGBT's, etc.) und ihrer internen Leistungsversorgung abhängt. Ferner sollte ein idealer Treiber seinen Strom an jede nachgeschaltete Last (z.B. der Antrieb) liefern können, unabhängig davon, wie hoch die erforderliche Spannung ist. Reale Treiber sind jedoch auf ihre maximal erzeugbare Spannung beschränkt, welche gewöhnlich ihre interne Versorgungsspannung ist (auch Busspannung genannt). Folglich hat ein realer Treiber hinsichtlich des Stromes und der Spannung einen begrenzten Arbeitsbereich und zeigt somit im Bereich dieser Grenzen ein nichtlineares Verhalten. Damit ist auch die Regelstrecke 6 in diesem Grenzbereich nichtlinear.

Nachfolgend soll die Abhängigkeit der Strombegrenzung der Treiberstufe von dem nachgeschalteten Lasttyp erläutert werden: Mit einem im wesentlichen resistiven Lasttyp ist der Strom begrenzt auf den Wert:

$$I_{Last} = U_{Bus} / R_{Last}$$

Mit einem im wesentlichen induktiven Lasttyp ist die maximal mögliche zeitliche Stromänderung begrenzt auf den Wert:

$$dI_{Last}/dt = U_{Bus} / L_{Last}$$

Liefert die Treiberstufe z.B. einen sinusförmigen zeitlichen Stromverlauf, so sinkt damit die maximal mögliche zeitliche Stromänderung mit steigender Frequenz des Stromverlaufes.

Im Fall einer resistiven Last muß die interne Versorgungsspannung $U_{Bus}$ der Treiberstufe gerade so groß sein, daß der maximale Strom fließen kann, der durch den resistiven Widerstand begrenzt wird. Ist die Last beispielsweise ein Gleichstrommotor oder ein bürstenloser Motor, so fällt über dem Motor noch zusätzlich die in seinen Wicklungen induzierte und die über der Induktivität der Motorwicklung abfallende Spannung ab. Somit ist die an den Klemmen des Motors anliegende Spannung die Summe folgender über dem Motor abfallender Spannungen:

$$U_{Klemmen} = U_{ind.} + L\, dI/dt + R\, I$$

Die induzierte Spannung ist dabei proportional zur Drehgeschwindigkeit des Motors. Mit steigender Frequenz einer beispielsweise sinusförmigen Versorgungsspannung steigt daher die maximal notwendige Klemmenspannung $U_{Klemmen}$ zum Erzielen eines Stromflusses I durch die Motorwicklungen, da einerseits die induzierte Spannung aufgrund der höheren Drehgeschwindigkeit des Motors und andererseits die in der Induktivität der Motorwicklung abfallende Spannung ansteigt. Die von der Treiberstufe an den Motor anlegbare Klemmenspannung $U_{Klemmen}$ kann aber aufgrund der technischen Grenzen der Treiberstufe nicht größer als die interne Versorgungsspannung $U_{Bus}$ der Treiberstufe sein. Ist die erforderliche Klemmenspannung $U_{Klemmen}$ somit größer als die real erzeugbare maximale Spannung $U_{Bus}$, so kommt es zu einem Abschneiden des erforderlichen Stromes.

Zusammenfassend tritt das Abschneiden des Laststromes insbesondere bei hohen Frequenzen und großen Stromamplituden auf, da vorallem die zeitliche Stromänderung dann entsprechend groß sind. Somit werden große Ströme eher "gefiltert" als kleine Ströme. Die Übertragungfunktion des Regelsystems wird damit nichtlinear und ist abhängig vom Stellgrößenwert bzw. vom der Regelstrecke aufzuprägenden Stromwert.

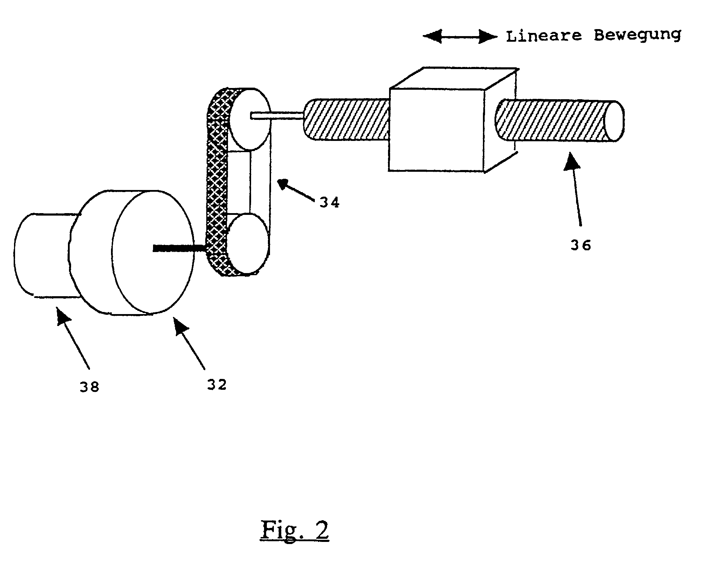

Fig. 2 zeigt schematisch ein Ausführungsbeispiel für einen in der Regelstrecke 6 enthaltenen Antrieb 33 mit nachgeschalteter Mechanik. Der Antrieb 33 treibt beispielsweise über ein Riemengetriebe 34 eine Spindel 36 derart an, daß eine auf der Spindel beweglich geführte Einheit eine Linearbewegung ausführt. Diese Einheit kann beispielsweise der Führungskopf oder der Werkzeug-Maschinentisch einer Elektroerosionsmaschine sein. Gerade für derartige Maschinen wird eine hohe Positioniergenauigkeit der Führungsköpfe gefordert.

Häufig sind diese Maschinen als Mehrachsensysteme ausgebildet. In diesen Mehrachsensystemen wird beispielsweise ein Führungskopf mittels mehrerer derartiger Antriebssysteme entlang unterschiedlicher Koordinatenachsen geführt bzw. in unterschiedliche Winkel geneigt bzw. gedreht. Insbesondere bei der Führung entlang senkrecht zueinander ausgerichteter Koordinatenachsen kommt es besonders auf die Genauigkeit jedes Antriebes an, da sich ein Fehler eines Antriebes aufgrund des Ausrichtungsfehlern eines Achsensysteme auch auf die Lage entlang der Koordinatenrichtung eines anderen Achsensystems auswirken kann.

Der Antrieb 33 ist beipielsweise mit einem optischen Sensorsystem 38 (z.B. ein Rotations-Encoder) gekoppelt, das die Position bzw. Lage - also die Regelgröße - des Antriebes 33 ermittelt. Darüberhinaus kann alternativ oder auch zusätzlich ein Sensorsystem (nicht gezeigt) direkt an der Spindel 36 bzw. der geführten Einheit angeordnet sein, das die Lage der Einheit direkt ermittelt und damit die Ungenauigkeiten des Riemengetriebes 34 und der Spindel 36 bereits berücksichtigt. Von derartigen Mehrachsensystemen bzw. Spindelantrieben wird insbesondere eine schnelle dynamische Reaktionszeit, minimales Überschwingen der Regelgröße über die Führungsgröße, kurze Regelzeiten, eine hohe Positioniergenauigkeit, eine gute Robustheit gegen Laständerungen, gute Reibungskompensationseigenschaften und ein geringes Positionsrauschen im Stillstand sowie aufeinander abgestimmte dynamische Eigenschaften der einzelnen Achsen gefordert.

Es sei bemerkt, daß der PIV-Regler 4 selbstverständlich auch in Verbindung mit anderen Motoren als bürstenlosen Motoren verwendet werden kann, z.B. mit DC-Motoren, Asynchronmotoren, Schrittmotoren, Reluktanzmotoren usw..

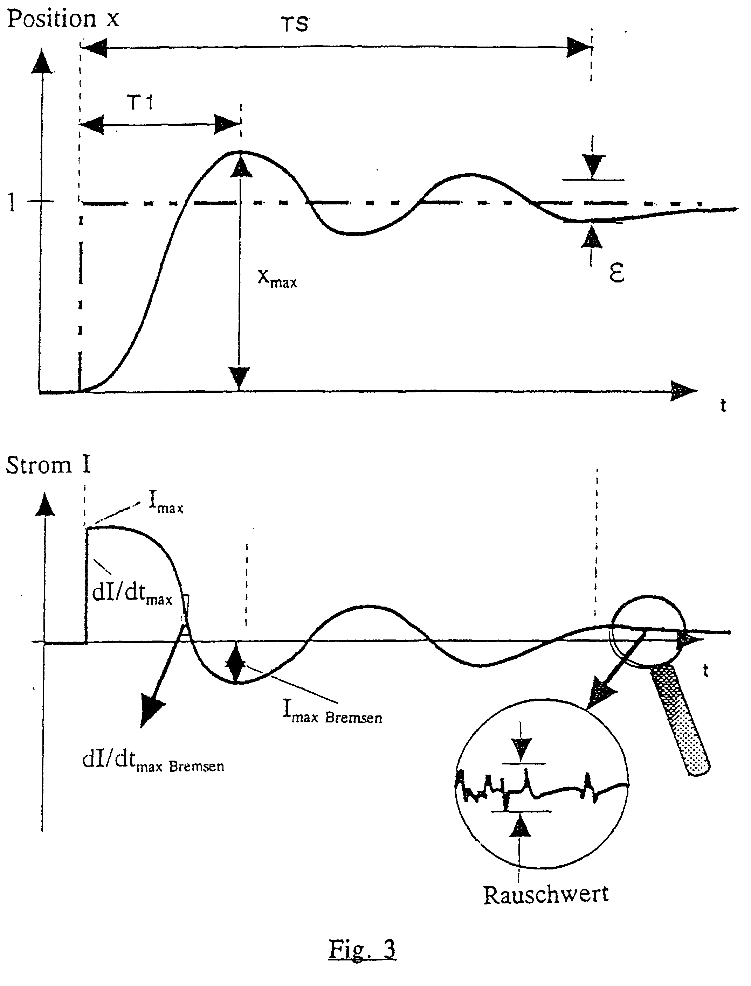

Fig. 3 zeigt im oberen Diagramm einen zeitlichen Führungsgrößenverlauf (gestrichelt dargestellt) und einen zeitlichen Regelgrößenverlauf (mit durchgezogener Linie dargestellt). Der Führungsgrößen- und der Regelgrößenverlauf sind in diesem Ausführungsbeispiel für zeitlich aufeinanderfolgende Lagewerte, beispielsweise für ein elektrisch anzutreibendes Achsensystems. Das untere Diagramm zeigt einen entsprechenden Stellgrößenverlauf, der in diesem Ausführungsbeispiel aus zeitlich aufeinanderfolgenden Stromwerten für die Treiberstufe des elektrischen Antriebes besteht. Im oberen Diagramm sind die Positionswerte der Regelgröße auf die Positionswerte der Führungsgröße normiert. Der Führungsgrößenverlauf weist in Fig. 3 eine Stufenform auf.

Wie oben erwähnt, leitet der Fuzzy-Regler 8 aus den gemessenen und/oder berechneten Stellgrößen- und Regelgrößenwerten physikalische Größen ab, die er als Eingangsgrößen für seine Regelbasen 22 und 26 verwendet. Die physikalischen Größen sind in Fig. 1 im Symbolbild für den Fuzzy-Regler 8 bereits angedeutet und sollen nun anhand Fig. 3 näher erläutert werden.

Die erste abgeleitete physikalische Größe ist der normierte Wert eines ersten Maximums $x_{max}$ im Positionsverlauf. Der Positionsverlauf nimmt dieses Maximum $x_{max}$ bei entsprechender Wahl der Reglerparametern erst ein, nachdem die Regelgröße über die Führungsgröße übergeschwungen ist. Bleibt die Regelgröße stets unterhalb der Führungsgröße, so spricht man vom aperiodischen Grenzfall, der gewöhnlich lange Regelzeiten nach sich zieht. Dieser Grenzfall soll jedoch durch entsprechende Wahl der Reglerparameter vermieden werden. Hierzu leitet der Fuzzy-Regler 8 aus dem Regelgrößenverlauf einen zweiten internen logischen Wert $T_{1\,fertig}$ (nicht gezeigt) ab, der angibt, ob ein Überschwingen stattgefunden hat oder nicht (aperiodischer Grenzfall).

Die dritte physikalische Größe ist eine Zeitdauer $T_1$, welche die Zeit vom Zeitpunkt des Sprunges des sprungförmigen Führungsgrößenverlauf bis zum Erreichen des ersten Maximum $x_{max}$ der Regelgröße angibt.

Die vierte physikalische Größe ist eine Stillstand-Zeit $T_S$, welche die Zeitdauer vom Zeitpunkt des Sprunges des sprungförmigen Führungsgrößenverlaufes bis zum Zeitpunkt angibt, bei welchem der Wert der Regelgröße innerhalb einer vorgegebenen Schranke ε um den (hier konstanten) Führungsgrößenverlauf herum verbleibt. Die Stillstand-Zeit TS gibt also an, wann sich der Antrieb hinsichtlich einer vorgegebenen Genauigkeitsanforderung im Stillstand befindet. Die Schranke ε kann dabei willkürlich gewählt werden. Bei der Auswahl von ε können die mechanischen Eigenschaften der Regelstrecke 6 oder das Schwingverhalten des gesamten Regelsystems berücksichtigt werden. Vorzugsweise ist der Wert für ε derart auszuwählen, daß einerseits die gewünschte Genauigkeit in der Position erreicht wird und andererseits die Zeitdauer $T_s$ und damit die Regelzeiten ausreichend kurz sind, um eine schnelle Reaktionszeit des Regelsystems zu erzielen. Bevorzugt wird der Wert für ε in der Größenordnung von +/- 5% der Führungsgröße gewählt. Der Lageverlauf x (t) wird laufend gemessen, wobei hierfür beispielsweise das dem Antrieb 33 zugeordnete Sensorsystem 38 verwendet werden kann.

Die weiteren physikalischen Größen leitet der Fuzzy-Regler 8 aus dem im unteren Diagramm in Fig. 3 gezeigten Stellgrößenverlauf (mit durchgezogener Linie dargestellt) ab. Den zeitlichen Stellgrößenverlauf gibt der PIV-Regler 4 unter Berücksichtigung des im oberen Diagramm in Fig. 3 gezeigten zeitlichen Führungsgrößenverlaufes (gestrichelt dargestellt) und bei geschlossenem Regelkreis auf die Regelstrecke 6. Die Stellgröße ist in diesem Ausführungsbeispiel ein vom PIV-Regler 4 berechneter Stromwert, der beispielsweise an die in der Regelstrecke 6 enthaltene Treiberstufe gegeben wird. Die Stromwerte liegen also bereits in berechneter Form vor, können ggf. aber auch aus einem über die Stellgrößen-Verbindung 12 fließenden und daher zu messenden Strom abgeleitet werden.

Ist der dem PIV-Regler 4 beaufschlagte Führungsgrößenverlauf stufenförmig und genügend groß, so entspricht der vom PIV-Regler 4 an die Regelstrecke 6 gegebene Stromwert zum Zeitpunkt des Sprunges an dem von der Treiberstufe maximal erzeugbaren Strom $I_{max}$. Dieser Sprung vom Strom Null auf $I_{max}$ entspricht einem unendlich hohen dI/dt. Die Treiberstufe kann aber aus technischen Gründen nur ein bestimmtes (endliches) dI/dt bewirken. Die hierbei entstehende Übersteuerung und damit einhergehende Nichtlinearität der gesamten Regelstrecke wird während der Beschleunigungsphase (entspricht dem Zeitintervall, in dem der Strom I größer als Null ist) toleriert, weil hiermit die bestmögliche Reaktionszeit erreicht werden kann. Wie nachfolgend beschrieben, ist es für das Verhalten des Regelsystems wichtig, daß $I_{max}$ und $dt/dt_{max}$ lediglich während der Bremsphase (entspricht dem Zeitintervall, in dem der Strom I kleiner als Null ist) nicht überschritten werden.

Nach der Beschleunigungsphase wird die Bremsphase eingeleitet. Hierzu wird vorzugsweise anfangs der Strom reduziert und anschließend im Vorzeichen geändert, damit der Antrieb 33 gebremst wird, wenn die Regelgröße über die Führungsgröße überschwingt. Dieses Überschwingen wird jedoch - wie oben erwähnt - gewünscht, um den aperiodischen Grenzfall zu vermeiden. Der maximale Strom in der Bremsphase $I_{max\ Bremsen}$ darf den maximalen Strom $I_{max}$ jedoch nicht überschreiten und soll günstigenfalls sogar immer etwas niedriger bleiben, damit die Treiberstufe sicher in ihrem linearen Bereich arbeitet. Tritt nämlich in der Bremsphase eine Sättigung des Treiberstromes auf - der berechnete Wert für $I_{max\ Bremsen}$ ist also größer als der maximal von der Treiberstufe erzeugbare Strom $I_{max}$ - so kann es zu unerwünschtem starken Überschwingen der Regelgröße über die Führungsgröße kommen, da der Antrieb 33 nicht wie vom Regler gefordert ausreichend gebremst werden kann. Störende Oszillationen im Lageverlauf des Antriebes 33 sind die Folge.

Die maximale zeitliche Stromänderung tritt dann auf, wenn die volle Versorgungsspannung $U_{Bus}$ an der Induktivität L des Motors anliegt. Dies ist (unter Voraussetzung eines kleinen Widerstandes R ) dann der Fall, wenn die Transistoren der Leistungsstufe voll durchgeschaltet sind und der Motor sich im Stillstand befindet ($U_{ind}$ = 0, vgl. Formel auf Seite 18). Unter dieser Bedingung ist die maximale zeitliche Stromänderung:

$$dI/dt_{max} = U_{Bus} / L,$$

wobei $U_{Bus}$ die interne Versorgungsspannung der Treiberstufe und L die Gesamt-Induktivität der Treiberstufe und des Antriebes 33 ist. Es muß daher sichergestellt werden, daß die maximal gewünschte, zeitliche Stromänderung $dI/dt_{max}$, die auf die Regelstrecke aufgeprägt werden soll, diesen Wert nie überschreitet. Andernfalls würde es zu einem Abschneiden des Stromes kommen, da die Regelstrecke 6 die aufgeprägte Stromgröße nicht realisieren kann und folglich die Übertragungsfunktion des Regelsystems nichtlinear werden.

Es sei bemerkt, daß die oben abgeleiteten Bedingungen nur für den Fall gelten, daß sich der Antrieb 33 im Stillstand befindet und damit die induzierte Spannung $U_{ind}$ gleich Null ist. Steht der Antrieb 33 nicht still, so ist die maximal mögliche aufprägbare zeitliche Stromänderung $dI/dt_{max}$ noch geringer, da die maximale Klemmenspannung $U_{Klemmen}$ nur noch die Differenz aus der internen Versorgungsspannung des Treibers $U_{Bus}$ und der induzierten Spannung $U_{ind}$ ist.

In Fig. 3 ist der maximale Stromanstieg $dI/dt_{max}$ in der Beschleunigungsphase als vertikale Linie eingezeichnet, entspricht jedoch in Realität einer steilen Geraden. Bei entsprechend großer Stufe bzw. Anstieg des stufenförmigen Führungsgrößenverlaufes wird in der Beschleunigungsphase unter Berücksichtigung des maximalen Stromanstieges $dI/dt_{max}$ auch der maximal von der Treiberstufe erzeugbare Strom $I_{max}$ erreicht. Dies ist vorteilhaft, um die Regelzeiten kurz zu halten. Ist die Stufenhöhe nicht groß genug, so bleibt der maximale Strom in der Beschleunigungsphase ggf. unterhalb von $I_{max}$.

Vorteilhaft können vor allem für einen Antrieb 33 mit nachgeschaltetem Spindeltrieb immer Reglerparameter gefunden werden, mit denen bei maximalem Beschleunigungsstrom $I_{max}$ in der Beschleunigungsphase immer ein geringerer maximaler Bremsstrom $I_{max\ Bremsen}$ in der Bremsphase ausreicht, um das Regelsystem stabil zu regeln. Ebenso kann der PIV-Regler 4 in der Beschleunigungsphase einen maximalen Stromwert $I_{max}$ ausgeben, der die technischen Grenzen der Treiberstufe überschreitet (dies gilt analog für die maximale zeitliche Stromänderung). Die dabei auftretende Sättigung der Treiberstufe und die damit einhergehende Nichtlinearität des Regelsystems kann in der Beschleunigungsphase in Kauf genommen werden, wenn die für das Regelverhalten relevante Bremsphase davon nicht betroffen wird.

Üblicherweise wählt der PIV-Regler 4 in der Beschleunigungsphase jedoch die maximale Stromänderung $dI/dt_{max}$ und den maximalen Strom $I_{max}$ so aus, daß gerade die technischen Grenzen der Treiberstufe und des Antriebes 33 erreicht werden. Die anschließend ermittelten Werte für $I_{max\ Bremsen}$ und $dI/dt_{max}$ Bremsen sollten sich auch nicht den technischen Grenzen annähern, d.h. sie sollten für alle möglichen Führungsgrößenverläufe stets kleiner als die maximal vom Treiber bereitstellbaren Werte $I_{max}$ und $dI/dt_{max}$ sein. Dies gilt insbesondere für den Fall, daß der stufenförmige Führungsgrößenverlauf seine größte Stufenhöhe aufweist. Bei der Abstimmung der Reglerparameter genügt es jedoch, diese Bedingung für einen Führungsgrößenverlauf mit einer derart großen Stufenhöhe sicherzustellen, daß der von der Treiberstufe mit Leistung versorgte Antrieb seine maximal vorgesehene Geschwindigkeit erreicht.

Aus dem zeitlichen Stromverlauf wird ferner eine Art Rauschwert des Stromes ermittelt, der angibt, wie "nervös" das Regelsystem ist. Der Rauschwert kann extrem hoch werden, wenn der Reglerparameter des V-Reglerglied des PIV-Reglers 4 zu hoch ist. Der Rauschwert wird lediglich aus den Strombeiträgen des P- und des V-Reglergliedes des PIV-Reglers 4 abgeleitet, beispielsweise als Differenzwert zwischen dem höchsten und dem niedrigsten Stromwert des Strombeitrages des P- und des V-Reglergliedes während einer vorgegebenen Zeit nach Ablauf der Stillstand-Zeit $T_S$, also wenn sich der Antrieb 33 im Stillstand befindet. Ebenso kann der Rauschwert auch aus dem gemessenen Positionsverlauf auf eine ähnliche Art ermittelt werden.

Bislang wurde nur die Strombegrenzung berücksichtigt. Die Spannungsbegrenzung muß aber ebenfalls berücksichtigt werden, da sie die maximale Geschwindigkeit des Antriebes 33 begrenzt. Dies ist eine Aufgabe der CNC 2 in Fig. 1, die dem PIV-Regler 4 lediglich solche zeitlichen Positionsänderungen und damit auch Geschwindigkeitsanderüngen aufprägen sollte, welche die technischen Grenzen der Treiberstufe (interne Versorgungsspannung $U_{Bus}$) nicht überschreiten. Wenn die CNC 2 von sich aus diese Grenzen berücksichtigt, so genügt es, daß der PIV-Regler 4 innerhalb des vorgegebenen maximalen Geschwindigkeitsintervall ohne Treiberstufen-Sättigung arbeitet.

Bei der Abstimmung der Reglerparameter kann beispielsweise mit einer kleinen Stufenhöhe begonnen und diese solange erhöht werden, bis der Antrieb 33 während der Beschleunigungsphase seine maximal vorgesehene Geschwindigkeit erreicht. Die für die maximale Stufenhöhe abgestimmten Reglerparameter können anschließend für jede geringere Stufenhöhe verwendet werden. Andererseits kann aber auch ein ungefährer Wert für die maximale Stufenhöhe vorgegeben werden, bei welcher die zu erwartende maximale Geschwindigkeit des Antriebes 33, die aus den technischen Daten des Antriebes 33 bekannt ist, noch nicht ganz erreicht wird.

Diesselbe Anforderung gilt für die maximale Beschleunigung des Antriebes mit nachgeschalteter Mechanik. Diese kann auf die gleiche - wie oben für die maximale Geschwindigkeit beschriebene - Art berücksichtigt werden.

Die Werte für die Geschwindigkeit und die Beschleunigung können aus der gemessenen Lage - der Regelgröße - abgeleitet werden.

Ergänzend sei bemerkt, daß ein Regelsystem einfach auf sein lineares Verhalten hin untersucht werden kann, da die zeitlichen Stellgrößenverläufe als Reaktion auf stufenförmige Führungsgrößenverläufe ähnlich sind (im wesentlichen proportional) wie zeitliche Stellgrößenverläufe als Reaktion auf Führungsgrößenverläufe unterschiedlichster Form. Somit ist es ausreichend sicherzustellen, daß die zeitlichen Regelgrößenverläufe als Reaktionen auf stufenförmige Führungsgrößenverläufe mit unterschiedlichen Stufenhöhen, insbesondere in der Bremsphase, einen ähnlichen Verlauf haben.

Bislang wurden nur stufenförmige Führungsgrößenverläufe diskutiert. In der funkenerosiven Maschinenbearbeitung treten jedoch häufiger rampenförmige Führungsgrößenverläufe auf. Bei den rampenförmigen Führungsgrößenverläufen findet am Anfang und am Ende der Rampe ein Sprung in der Geschwindigkeit und auf der Rampe eine Positionsverschiebung mit konstanter Geschwindigkeit statt. Anhand einer mathematischen Laplace-Transformation kann gezeigt werden, daß die Regelgrößenverläufe hinsichtlich der Geschwindigkeit für rampenförmige Positions-Führungsgrößenverlauf ähnlich sind wie die Regelgrößenverläufe hinsichtlich der Position für stufenförmige Positions-Führungsgrößenverläufe. Somit erhält man automatisch einen guten zeitlichen Geschwindigkeitsverlauf für einen rampenförmigen Führungsgrößenverlauf, wenn man einen guten zeitlichen Positionsverlauf für einen stufenförmigen Führungsgrößenverlauf erhalten hat.

Zusammenfassend stimmt der Fuzzy-Regler 8 in Fig. 1 also die Reglerparameter des PIV-Reglers 4 unter Berücksichtigung der Linearität des Regelverhaltens ab, indem die Werte $I_{max-Bremsen}$ und $dI/dT_{max-Bremsen}$ für stufenförmige Führungsgrößenverläufe verfolgt werden, für welche die Geschwindigkeit und die Beschleunigung des Antriebes 33 von Null bis zum Maximalwert variiert werden. Die Reglerparameter werden dann derart abgestimmt, daß die theoretischen, zuvor berechneten maximal möglichen Stromwerte $I_{max}$ und $dI/dT_{max}$ in der Bremsphase nie überschritten werden. Gleichzeitig versucht der PIV-Regler 4, die Werte $X_{max}$, $T_1$ und $T_s$ sowie den Rauschwert zu minimieren, bzw. vorgegebenen Modellwerten anzunähern und einen aperiodischen Grenzfall zu vermeiden (s.o.).

Es sei bemerkt, daß die Werte $I_{max-Bremsen}$ und $dI/dT_{max-Bremsen}$ ebenso analytisch berechnet werden können, falls die Übertragungsfunktion des PIV-Reglers 4 und die maximal zulässige Antriebsgeschwindigkeit und -beschleunigung vorgegeben ist. Aus Gründen der Verfahrensökonomie werden vorliegend die physikalischen Größen $X_{max}$, $T_1$, $T_S$ und der Rauschwert sowie die Werte $I_{max-Bremsen}$ und $dI/dT_{max-Bremsen}$ direkt aus dem Stellgrößen- bzw. Regelgrößenverlauf abgeleitet.

Der Fuzzy-Regler 8 in Fig. 1 stimmt die Reglerparameter des PIV-Reglers 4 in zwei Abstimmschritten ab: im ersten Abstimmschritt werden die Reglerparameter des P- und des V-Reglergliedes des PIV-Reglers 4 abgestimmt und im zweiten Schritt die des I-Reglergliedes. Die Abstimmung erfolgt in beiden Schritten im Prinzip ähnlich: Der Führungsverlaufgeber 18 gibt einen stufenförmigen Führungsgrößenverlauf auf den PIV-Regler 4. Der Fuzzy-Regler 8 ermittelt dann aus der Stell- und der Regelgröße die physikalischen Größen in Echtzeit (bzw. im Multitaskbetrieb). Sobald der Antrieb 33 zum Stillstand kommt (oder die Stillstand-Zeit $T_S$ eine vorgegebene maximale Zeitdauer überschritten hat, obgleich der Antrieb 33 noch nicht stillsteht), werden die beiden Regelbasen 22 und 26 des Fuzzy-Reglers 8 mit den ermittelten physikalischen Größen gefüttert. Die aus den Regelbasen abgeleiteten defuzzifizierten Ausgabewerte können beispielsweise Korrekturwerte $dK_P$, $dK_V$, $dK_I$ für Reglerparameter $K_P$, $K_V$, $K_I$ entsprechend der einzelnen Reglerglieder des PIV-Reglers 4 sein. Die neuen Reglerparameter $K_{P\,(neu)}$, $K_{V\,(neu)}$, $K_{I\,(neu)}$ können dann aus den zuvor ermittelten (alten) Reglerparametern $K_{P\,(alt)}$, $K_{V\,(alt)}$, $K_{I\,(alt)}$ folgendermaßen berechnet werden:

$$K_{P\,(neu)} = (1 + dK_P) * K_{P\,(alt)}$$

$$K_{V\,(neu)} = (1 + dK_V) * K_{V\,(alt)}$$

$$K_{I\,(neu)} = (1 + dK_I) * K_{I\,(alt)}$$

Die alten Reglerparameter $K_{P\,(alt)}$, $K_{V\,(alt)}$ und $K_{I\,(alt)}$ des PIV-Reglers 4 werden nun durch die neuen Reglerparameter $K_{P\,(neu)}$, $K_{V\,(neu)}$ und $K_{I\,(neu)}$ ersetzt und der Abstimmzyklus wiederholt. Dies wird solange durchgeführt, bis ein optimaler Stellgrößen- bzw. Regelgrößenverlauf bezüglich eines vorgegebenen Modells gefunden ist.

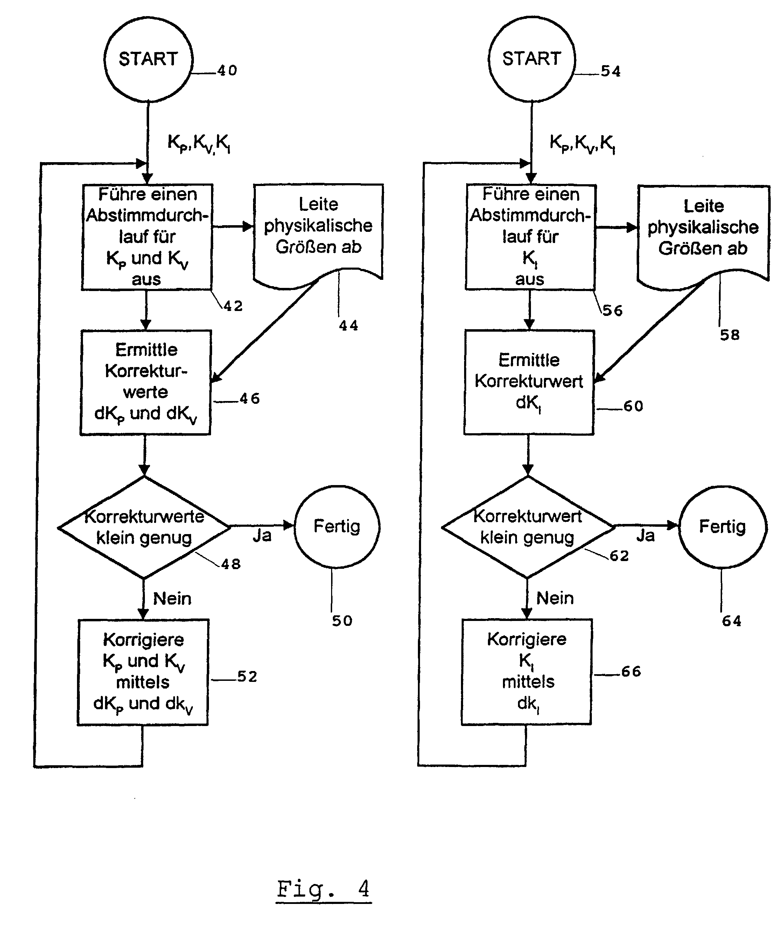

Fig. 4 zeigt zwei Ablaufdiagramme 40 und 54, welche einen Abstimmzyklus jeweils im ersten und im zweiten Abstimmschritt des Abstimmvorgangs illustrieren.

Das linke Ablaufdiagramm 40 zeigt einen Abstimmzyklus für den ersten Abstimmschritt zum Abstimmen der Reglerparameter $K_P$ und $K_V$ des P- und des V-Reglergliedes. Der Reglerparameter $K_I$ des I-Reglergliedes wird im ersten Abstimmschritt vorzugsweise auf einem Wert konstant gehalten, der den Einfluß des I-Reglergliedes auf den gesamten Regelvorgang gerade so groß beläßt, daß statische Lasten o.ä. vom Antrieb 33 gehalten werden können.

In einem ersten Schritt 42 wird ein Abstimmdurchlauf ausgeführt, indem der Führungsgrößenverlaufgeber 18 beispielsweise einen stufenförmigen Führungsgrößenverlauf an den Eingang des PIV-Reglers 4 gibt. Der PIV-Regler 4 regelt die Regelstrecke 6 mit seinen bisherigen Reglerparametern $K_P$, $K_V$ und $K_I$ derart, daß dem aufgeprägten zeitlichen Führungsgrößenverlauf entsprochen wird. Parallel werden in einem dem Schritt 42 nebengeordneten Schritt 44 die oben genannten physikalischen Größen aus dem berechneten (ggf. auch gemessenen) Stellgrößenverlauf und dem gemessenen Regelgrößenverlauf abgeleitet und dem Fuzzy-Regler 8 zum Abstimmen der Reglerparameter $K_P$ und $K_V$ bereitgestellt. Nachdem der Abstimmdurchlauf abgeschlossen ist, bestimmt der Fuzzy-Regler 8 in einem Schritt 46 die Korrekturwerte $dK_P$ und $dK_V$. Diese Korrekturwerte $dK_P$ und $dK_V$ werden anschließend in einem Schritt 48 dahingehend untersucht, ob sie klein genug sind und damit angenommen werden kann, daß die bisherigen Reglerparameter $K_P$ und $K_V$ wunschgemäß abgestimmt sind. Sind die Korrekturwerte $dK_P$ und $dK_V$ klein genug, so wird zu einem Schritt 50 verzweigt und der Abstimmzyklus beendet. Andernfalls wird zu einem Schritt 52 verzweigt, bei welchem die Reglerparameter $K_P$ und $K_V$ mittels der Korrekturwerte $dK_P$ und $dK_V$ korrigiert werden. Vom Schritt 52 wird zurück zum Schritt 42 gesprungen und der Ablaufzyklus erneut durchlaufen.

Das rechte Ablaufdiagramm 54 zeigt den Abstimmzyklus für den zweiten Abstimmschritt zum Abstimmen des Reglerparameters $K_I$ des I-Reglergliedes. In einem ersten Schritt 56 wird ein Abstimmdurchlauf ausgeführt, indem der Führungsgrößenverlaufgeber 18 beispielsweise einen zweistufenförmigen Führungsgrößenverlauf an den Eingang des PIV-Reglers 4 gibt. Parallel werden in einem dem Schritt 56 nebengeordneten Schritt 58 die oben genannten physikalischen Größen aus dem berechneten (ggf. auch gemessenen) Stellgrößenverlauf und dem gemessenen Regelgrößenverlauf abgeleitet und dem Fuzzy-Regler 8 zum Abstimmen des Reglerparameters $K_I$ bereitgestellt. Nachdem der Abstimmdurchlauf abgeschlossen ist, bestimmt der Fuzzy-Regler 8 in einem Schritt 60 den Korrekturwert $dK_I$. Der Korrekturwert $dK_I$ wird anschließend in einem Schritt 62 dahingehend untersucht, ob er klein genug ist und damit angenommen werden kann, daß der bisherige Reglerparameter $K_I$ gut genug abgestimmt ist. Ist der Korrekturwert $dK_I$ klein genug, so wird zu einem Schritt 64 verzweigt und der Abstimmzyklus beendet. Andernfalls wird zu einem Schritt 66 verzweigt, bei welchem der Reglerparameter $K_I$ mittels des Korrekturwertes $dK_I$ korrigiert wird. Vom Schritt 66 wird zurück zum Schritt 56 gesprungen und der Ablaufzyklus erneut durchlaufen.

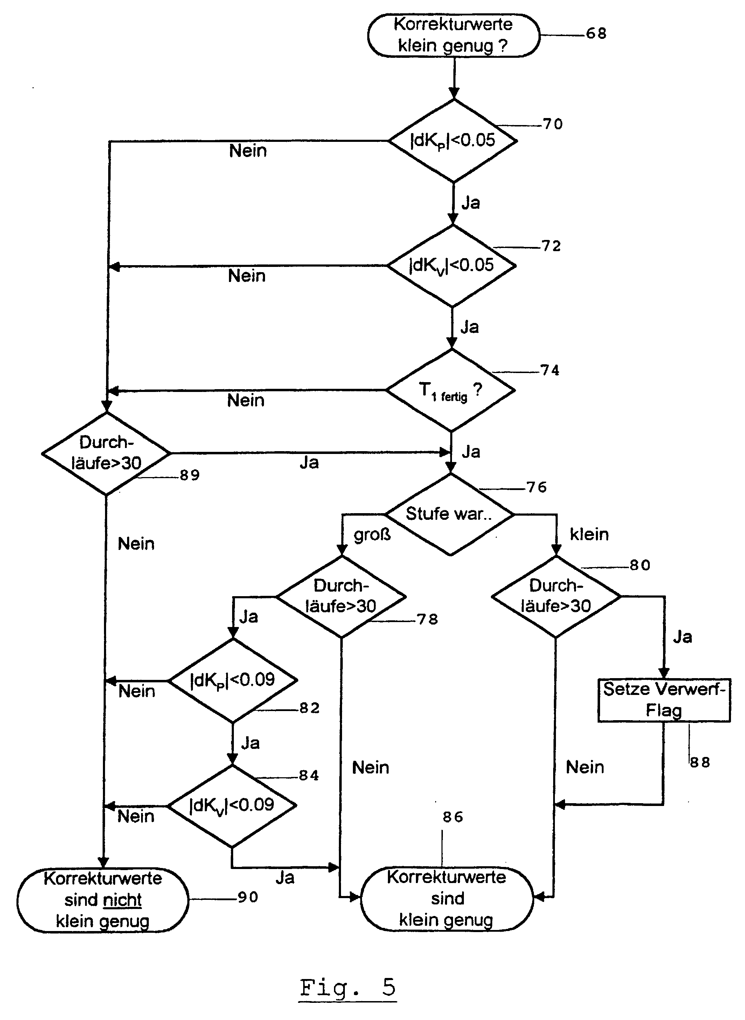

Fig. 5 zeigt ein Ablaufdiagramm für einen Entscheidungsalgorithmus 68, der entscheidet, ob der Abstimmzyklus abgeschlossen ist, d.h. ob die Korrekturwerte $dK_P$ und $dK_V$ klein genug sind. Hierzu wird in einem ersten Schritt 70 untersucht, ob der Korrekturwert $dK_P$ für den Reglerparameter $K_P$ kleiner als ein vorgegebener Wert ist (hier 5%). Ist dies nicht der Fall, so wird zu einem Schritt 89 verzweigt. Andernfalls wird zu einem zweiten Schritt 72 verzweigt, bei welchem untersucht wird, ob der Korrekturwert $dK_V$ für den Reglerparameter $K_V$ kleiner als ein vorgegebener Wert ist (hier 5%). Ist dies nicht der Fall, so wird zum Schritt 89 verzweigt. Andernfalls wird zu einem dritten Schritt 74 verzweigt, bei welchem untersucht wird, ob der logische Wert $T_{1\,fertig}$ ein Überschwingen der Regelgröße über die Führungsgröße angibt. Ist dies nicht der Fall, so wird zum Schritt 89 verzweigt, andernfalls zu einem vierten Schritt 76. Im Schritt 89 wird untersucht, ob die Anzahl der Abstimmdurchläufe einen vorgegebenen Wert (hier 30) überschritten hat. Ist dies der Fall, so wird zum vierten Schritt 76 verzweigt, andernfalls zu einem Schritt 90.

Im vierten Schritt 76 wird untersucht wird, ob ein stufenförmiger Führungsgrößenverlauf mit einer großen oder einer kleinen Stufe aufgeprägt ist. Bevorzugt wird nämlich der ganze Abstimmvorgang des P- und des V-Reglergliedes zuerst mit kleinen Stufen und anschließend mit großen Stufen durchgeführt. Ist die Stufe groß, so wird zu einem fünften Schritt 78 verzweigt, bei welchem untersucht wird, ob die Anzahl der Abstimmdurchläufe einen bestimmten Wert (hier 30) überschritten hat. Wird im fünften Schritt 78 festgestellt, daß die Anzahl größer als 30 ist, so wird zu einem Schritt 86 verzweigt. Andernfalls wird zu einem siebten Schritt 82 verzweigt, bei welchem untersucht wird, ob der Korrekturwert $dK_P$ kleiner als ein vorgegebener Wert ist (hier 9%). Wird im siebten Schritt 82 festgestellt, daß $dK_P$ kleiner als 9% ist, dann wird zu einem achten Schritt 84 verzweigt, bei welchem untersucht wird, ob der Korrekturwert $dK_V$ kleiner als ein vorgegebener Wert ist (hier 9%). Andernfalls wird zu einem Schritt 90 verzweigt. Wird im achten Schritt 84 festgestellt, daß $dK_V$ kleiner als 9% ist, dann wird zum Schritt 86 verzweigt, andernfalls zum Schritt 90.

Ist die Stufe dagegen klein, so wird zu einem sechsten Schritt 80 verzweigt, bei welchem untersucht wird, ob die Anzahl der Abstimmdurchläufe einen bestimmten Wert (hier 30) überschritten hat. Wird im sechsten Schritt 80 festgestellt, daß die Anzahl der Abstimmdurchläufe einen bestimmten Wert (hier 30) überschritten hat, dann wird zu einem neunten Schritt 88 verzweigt, andernfalls zum Schritt 86. Im neunten Schritt 88 wird ein sog. Verwerf-Flag gesetzt, das angeben soll, daß die korrigierten Reglerparameter $K_P$ und $K_V$ verworfen und durch ihre Anfangswerte ersetzt werden sollen. Der Algorithmus läuft vom neunten Schritt 88 weiter zum Schritt 86. Im Schritt 90 gibt der Entscheidungs-Algorithmus die Information an den übergeordneten Algorithmus 40, daß die Korrekturwerte $dK_P$ und $dK_V$ noch nicht klein genug sind und der Abstimmzyklus damit noch nicht beendet ist. Dagegen gibt der Entscheidungs-Algorithmus im Schritt 86 die Information an den übergeordneten Algorithmus 40, daß die Korrekturwerte $dK_P$ und $dK_V$ klein genug sind und der Abstimmzyklus abgeschlossen werden kann.

Am Schluß werden die Resultate der mit verschiedenen Stufenhöhen durchgeführten Abstimmvorgänge verglichen und daraus die geeigneten Reglerparameter $K_P$ und $K_V$ bestimmt. Falls das Verwerf-Flag gesetzt wurde, werden dabei die Resultate des Abstimmvorganges mit der kleinen Stufe berücksichtigt.

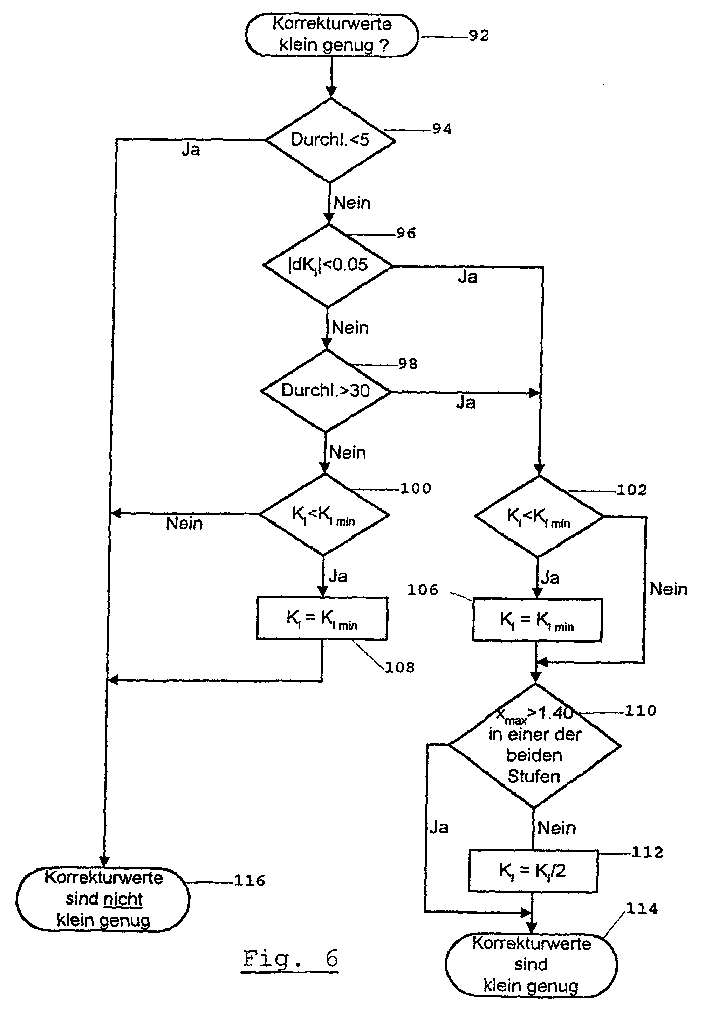

Fig. 6 zeigt ein ähnliches Ablaufdiagramm für den Entscheidungsalgorithmus 92, der für die Abstimmung des I-Reglers verwendet wird. Dieser entscheidet, ob der Abstimmzyklus beendet werden kann oder nicht, d.h. ob der Korrekturwert $dK_I$ klein genug ist. Hierzu wird in einem ersten Schritt 94 untersucht, ob die Anzahl der Abstimmdurchläufe noch unterhalb eines vorgegebenen Wertes liegt (hier 5). Ist dies der Fall, so wird zu einem Schritt 116, andernfalls zu einem zweiten Schritt 96 verzweigt. Mit dieser Abfrage soll auf jeden Fall aus Sicherheitsgründen eine Mindestanzahl an Abstimmdurchläufen sichergestellt werden.

Im zweiten Schritt 96 wird untersucht, ob der Betrag des Korrekturwertes $dK_I$ kleiner als ein vorgegebener Wert ist (im Beispiel 5%). Ist dies der Fall, so wird zu einem sechsten Schritt 102 verzweigt. Andernfalls wird zu einem dritten Schritt 98 verzweigt, bei welchem untersucht wird, ob die Anzahl der Abstimmdurchläufe einen bestimmten Wert (im Beispiel 30) überschritten hat. Ist dies der Fall, so wird zum sechsten Schritt 102 verzweigt. Ist dies nicht der Fall, so wird zu einem vierten Schritt 100 verzweigt, bei welchem untersucht wird, ob der Wert des Reglerparameters $K_I$ kleiner als ein minimaler Anfangswert des Reglerparameters $K_{I\,min}$ ist ($K_{I\,min}$ ist der Anfangswert für den Reglerparameter $K_I$, der vom Benutzer so gewählt ist, daß der Antrieb ggf. statische Lasten halten kann). Ist dies nicht der Fall, so wird zum Schritt 116 verzweigt. Andernfalls wir zu einem fünften Schritt 108 verzweigt, bei welchem der Wert des Reglerparameters $K_I$ auf den minimalen Anfangswert für den Reglerparameter $K_{I\,min}$ gesetzt wird. Damit wird sichergestellt, daß der minimale Anfangswert $K_{I\,min}$ niemals unterschritten wird und ev. Lasten nicht mehr gehalten werden können.

Vom fünften Schritt 108 läuft das Programm zum Schritt 116. Im sechsten Schritt 102 wird untersucht, ob der Wert des Reglerparameters $K_I$ kleiner als der minimale Anfangswert $K_{I\,min}$ ist. Ist dies nicht der Fall, so wird zu einem achten Schritt 110 verzweigt. Ist dies der Fall, so wird zu einem siebten Schritt 106 verzweigt, bei welchem die Werte des Reglerparameters $K_I$ auf den minimalen Wert des Reglerparameters $K_{I\,min}$ gesetzt wird (s.o.). Von dort läuft das Programm weiter zum achten Schritt 110, bei welchem untersucht wird, ob der Überschwingwert $x_{max}$ des Positionsverlaufes über den (ggf. zweistufigen) Führungsgrößenverlauf (s.u.), der auf den PIV-Regler 6 zum Abstimmen des Reglerparameters $K_I$ des Integralreglergliedes gegeben wird, größer als ein vorgegebener Wert ist (im gezeigten Fall 40% größer als der entsprechende Führungsgrößenwert). Im Falle eines zweistufigen Führungsgrößenverlaufes wird als Überschwingwert $x_{max}$ der größere Wert der beiden Maxima $x_{max1}$ und $x_{max2}$ ausgewählt (s.u.). Ist der Überschwingwert $x_{max}$ größer als der vorgegebene Wert, so wird zu einem Schritt 114 verzweigt. Andernfalls wird zu einem neunten Schritt 112 verzweigt, bei welchem der Wert des Reglerparameters $K_I$ auf seinen halben Wert gesetzt wird. Damit wird ein zu starkes vom Integralreglerglied verursachtes Überschwingen vermieden (dient als Sicherheit oder auch als Zusatz zu den Fuzzy-Regeln, die bereits ein zu starkes Überschwingen vermeiden sollten). Vom neunten Schritt 112 läuft das Programm weiter zum Schritt 114. Im Schritt 116 informiert der Entscheidungs-Algorithmus den übergeordneten Algorithmus 54 darüber, daß der Korrekturwert $dK_I$ noch nicht klein genug und der Abstimmvorgang damit noch nicht beendet ist. Im Schritt 114 gibt der Entscheidungs-Algorithmus die Information an den übergeordneten Algorithmus 54, daß der Korrekturwert $dK_I$ klein genug und der Abstimmvorgang damit abgeschlossen ist.

Auch wenn in den Fig. 5 und 6 nicht explizit dargestellt, ist auch die Überwachung von Oszillationen bzw. Instabilitäten des Stellgrößen- bzw. Regelgrößenverlaufes möglich. Sollten in der Regelphase zu große Oszillationen auftreten, so wird der Abstimmvorgang sofort abgebrochen, die Reglerparameter auf ihre Anfangswerte zurückgesetzt und ein Fehler ausgegeben. Dieser Fehlerfall tritt jedoch nur in den Fällen auf, in denen der Fuzzy-Regler 8 zum Abstimmen eines Reglersystems vorgesehen ist, das von der Struktur und vom Aufbau grundsätzlich verschieden ist. Ein derartiges Regelsystem könnte jedoch auch mit dem erfindungsgemäßen Verfahren abgestimmt werden, wenn die einzelnen Regelbasen des Fuzzy-Reglers 8 entsprechend an das neue System angepaßt werden, oder indem eventuell ein anderer Reglertyp als der PIV-Regler 4 verwendet wird.

Wie aus den Fig. 5 und 6 ersichtlich, konvergiert der Abstimmvorgang gewöhnlich in weniger - unter normalen Umständen sind sogar wesentlich weniger - als 30 Abstimmdurchläufen. Eine hohe Anzahl an Abstimmdurchläufen bedeutet, daß das Regelverhalten des PIV-Reglers 4 noch nicht zufriedenstellend ist, aber beispielsweise die Treiberstufen der Regelstrecke 6 bereits nahe an ihre technischen Grenzen angelangt sind und das Regelsystem nichtlinear zu werden droht. Es sei bemerkt, daß - aufgrund der Natur des Fuzzy-Reglers 8 - Korrekturwerte $dK_P$, $dK_V$ oder $dK_I$ mit einem Wert exakt gleich Null sehr unwahrscheinlich sind, obwohl der PIV-Regler 4 bereits zufriedenstellend arbeitet. Aus diesem Grund werden die vorgegebenen Schwellenwerte (5% bzw. 9%) für die beiden in den Fig. 5 und 6 gezeigten Entscheidungs-Algorithmen 68 und 92 verwendet.

Steigt die Anzahl der Abstimmdurchläufe für den Entscheidung-Algorithmus 68 über einen vorgegebenen Wert (im Beispiel 30), so wird das Verwerf-Flag gesetzt, das anzeigt, daß die abgestimmten Reglerparameter $K_P$ und $K_V$ zu verwerfen sind. Dies tritt jedoch nur unter besonderen Umständen auf, insbesondere wenn kleine Stufen eines stufenförmigen Führungsgrößenverlaufes auf den PIV-Regler 4 gegeben werden. Der Fuzzy-Regler 8 verwendet in diesem Fall anstelle der so abgestimmten Reglerparameter $K_P$ und $K_V$ diejenigen Reglerparameter, die beim Abstimmen unter Eingabe eines Führungsgrößenverlaufes mit großer Stufe erhalten wurden.

Die Reglerparameter $K_P$ und $K_V$ des Lage- und Geschwindigkeitsreglergliedes werden zuerst abgestimmt. Während dieses Abstimmvorganges wird der Reglerparameter $K_I$ des Integralreglergliedes auf einen konstanten, möglichst niedrigen Wert gesetzt. Mit dieser Maßnahme hat das Integralreglerglied im wesentlichen keinen Einfluß auf das Regelverhalten; es kann die Treiberstufe jedoch zum Bereitstellen einer notwendigen Vorspannung veranlassen, damit der Antrieb 33 etwaige statische Lasten halten kann. Während des Abstimmvorganges werden die Reglerparameter $K_P$ und $K_V$ iterativ verändert, bis ein zufriedenstellendes dynamisches Regelverhalten vorliegt. Das stationäre Verhalten wird während dieses Abstimmvorganges nicht berücksichtigt, da es im wesentlichen von dem Integralreglerglied geprägt wird. Es ist notwendig, verschiedene Abstimmdurchgänge mit auf den PIV-Regler 4 gegebenen stufenförmigen Führungsgrößenverläufen mit steigender Stufenhöhe durchzuführen, bis die Maximalgeschwindigkeit bzw. -beschleunigung der Regelstrecke 6 erreicht wird. In der Praxis hat sich herausgestellt, daß es ausreicht, das Lage- und das Geschwindigkeitsreglerglied lediglich für zwei stufenförmige Führungsgrößenverläufe abzustimmen. Zuerst wird ein Führungsgrößenverlauf mit einer kleinen Stufe ausgewählt, um eine stabile erste Lösung zu finden, bevor dem PIV-Regler 4 größere Stufen zugeführt werden, die zu Instabilitäten führen können. Mit der ersten Lösung wird ein zweiter Abstimmvorgang durchgeführt, bei welchem ein stufenförmiger Führungsgrößenverlauf mit großer Stufehöhe an den PIV-Regler 4 gegeben wird. Die Stufe ist so bemessen, daß beispielsweise 70% der maximalen Geschwindigkeit bzw. Beschleunigung der Regelstrecke 6 erreicht wird.

Die gewünschte Lösung für die Reglerparameter $K_P$ und $K_V$ sind solche Reglerparameter $K_{P(gr.)}$ und $K_{V(gr.)}$, welche bei dem stufenförmigen Führungsgrößenverlauf mit großer Stufenhöhe gefunden wurden. Sie können in Folge auch für kleinere Stufenhöhen verwendet werden. Üblicherweise sind die für große Stufenhöhen abgestimmten Reglerparameter $K_{P(gr.)}$ und $K_{V(gr.)}$ etwas geringer als für kleine Stufenhöhen aufgefundene Reglerparameter $K_{P(kl.)}$ und $K_{V(kl.)}$, da $K_{P(gr.)}$ und $K_{V(gr.)}$ verhindern sollen, daß die Treiberstufe in der Regelstrecke 6 in ihren Sättigungsbereich gelangt. Es kann jedoch vorkommen - z.B. falls die dynamische Reibung sehr groß ist - daß die für die große Stufenhöhe abgestimmten Reglerparameter $K_{P(gr.)}$ und $K_{V(gr.)}$ einen größeren maximalen Überschwingwert $x_{max}$ aufweisen als die zuvor für eine kleinere Stufenhöhe ermittelten Reglerparameter $K_{P(kl.)}$ und $K_{V(kl.)}$. Deshalb ist im Entscheidungs-Algorithmus 92 noch der achte Vergleichsschritt 110 implementiert, der in diesem Fall die für die große Stufe abgestimmten Reglerparameter $K_{P(gr.)}$ und $K_{V(gr.)}$ verwirft und an deren Stelle die für die kleine Stufenhöhe aufgefundenen Regler-Parameter $K_{P(kl.)}$ und $K_{V(kl.)}$ weiterverwendet. Beispielsweise tritt für Spindelantriebe gewöhnlich der andere Fall auf, also die statische Reibung dominiert. Mit den für die große Stufenhöhe aufgefundenen Reglerparametern $K_{P(gr.)}$ und $K_{V(gr.)}$ ist die Reaktion des gesamten Regelsystems leicht überdämpft und braucht daher eine etwas längere Zeit, um zum Stillstand zu gelangen. Dieses Problem wird mit dem Abstimmschritt für den Reglerparameter $K_I$ des Integralreglergliedes gelöst, indem der Reglerparameter $K_I$ entsprechend hoch abgestimmt wird.

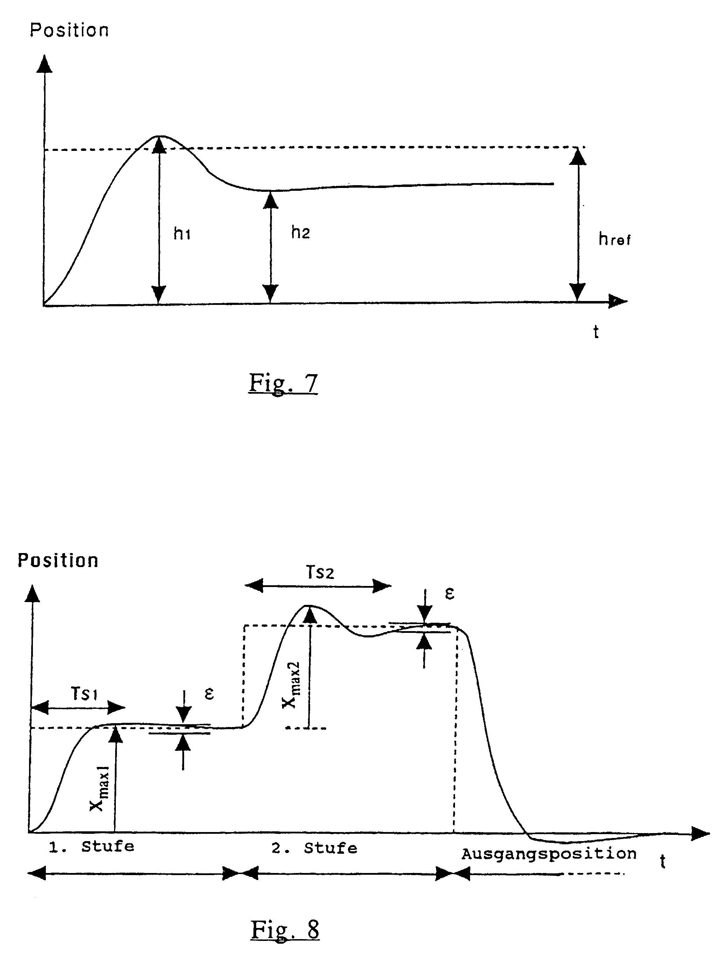

Fig. 7 zeigt einen möglichen zeitlichen Verlauf der Regelgröße als Reaktion auf einen aufgeprägten stufenförmigen Führungsgrößenverlauf. Der Führungsgrößenverlauf ist gestrichelt dargestellt und seine Stufenhöhe mit $h_{ref}$ bezeichnet. Der zeitliche Positionsverlauf ist mit durchgezogener Linie dargestellt. Insbesondere für große Stufenhöhen kann es vorkommen, daß die Regelgrößen - hier der Positionsverlauf - einen relativ kleinen Überschwingwert $h_1$ aber einen relativ großen Unterschwingwert $h_2$ zeigt. Der Fuzzy-Regler 8 muß auch diese Situation erkennen, da das Regelsystem offensichtlich unterdämpft ist (z.B. für vernachlässigbare Reibung oder für einen stärkeren Antrieb 33), obgleich der erste (normierte) Überschwingwert (d.h. $h_1/h_{ref}$) vergleichsweise gering ist. Dieser Fall kann dadurch berücksichtigt werden, daß der Überschwingwert, insbesondere für große Stufenhöhen, nach folgender Formel ermittel wird:

$$\text{Überschwingwert} = 1 + (h_1 - h_2) / 2$$

Für kleine Stufenhöhen wird der Überschwingwert wie gewöhnlich berechnet:

$$\text{Überschwingwert} = h_1 / h_{ref}$$

Der Fuzzy-Regler 8 ist derart ausgelegt, daß er stets nach einer Lösung für die Reglerparameter $K_P$, $K_V$ und $K_I$ sucht, die immer ein geringes Überschwingen der Regelgröße über den Führungsgrößenverlauf verursachen. Damit wir der aperiodische Grenzfall mit langen Einschwing- bzw. Regelzeiten vermieden. Der Führungsgrößen-Verlaufgeber 18 kann dem PIV-Regler 4 die zeitlich aufeinanderfolgenden Führungsgrößenwerte mit derselben Abtastrate eingeben, mit der die CNC 2 diese Werte erzeugt. Damit wird sichergestellt, daß das Regelsystem weitestgehend auf die vorgeschaltete CNC 2 optimiert ist.

Ebenso wird während des Abstimmvorganges das Mittel zum Erhöhen der Genauigkeit der von dem D/A-Wandler gewandelten Stellgröße abgeschalten sowie von der Maßnahme, den Reglerparameter $K_V$ des Geschwindigkeitsreglergliedes für kleine Positions- und Geschwindigkeitsfehler zu verringern, abgesehen.

Fig. 8 zeigt einen zweistufenförmigen Führungsgrößenverlauf zum Abstimmen des I-Reglergliedes und beispielhaft einen entsprechenden zeitlichen Regelgrößenverlauf. Nachdem die Reglerparameter $K_P$ und $K_V$ abgestimmt und dem PIV-Regler 4 eingegeben worden sind, wird der Reglerparameter $K_I$ des Integralreglergliedes abgestimmt. Der Anfangswert des Reglerparameter $K_I$ ist dabei derjenige Wert, der zum Abstimmen der Reglerparameter $K_P$ und $K_V$ ausgewählt wurde. Bekanntlich wird das Integralreglerglied eines PIV-Reglers 4 im wesentlichen dazu verwendet, um durch statische Lasten (z.B die Z-Achse einer Elektroerosionsmaschine) bedingte stationäre Fehler zu vermeiden und Reibung zu kompensieren. Dabei benötigt man zum Vermeiden stationärer Fehler keine kurzen Zeitkonstanten des Integralreglergliedes, da z.B. in Elektroerosionsmaschinen die statische Last auf die Z-Achse als im wesentlichen konstant angesehen werden kann. Anders verhält es sich bei der Kompensation der Reibung. Da diese möglichst schnell überwunden werden muß, ist die Stillstand-Zeit $T_S$ des Regelsystem (als Reaktion auf beispielsweise einen stufenförmigen Führungsgrößenverlauf) klein zu halten.

Daher sollte der Reglerparameter $K_I$ so groß wie möglich abgestimmt werden, wobei er nach oben begrenzt werden muß, damit das I-Reglergliedes nicht zu stark akkumuliert und ein starkes Überschwingen der Regelgröße über die Führungsgröße verursacht. Dem kann die unten beschriebene Anti-Übersättigungseinrichtung zumindest weitestgehend entgegenwirken.

Versuche haben gezeigt, daß die in Spindelantrieben vorhandene Reibung im wesentlichen statischer Natur ist und bei Richtungswechsel der Antriebsrichtung des Spindelantriebes aufgrund nichtlinearer Effekte in der mechanischen Energieübertragung ansteigt (Untersetzungsgetriebe, Riemengetriebe 34, Spindel 36, etc.). Damit ist die zur Überwindung der Reibung benötigte Kraft kleiner, wenn der Antrieb nach einer Unterbrechung in dieselbe Antriebsrichtung antreibt als bei einer Richtungsänderung. Um diese beiden Fälle zu berücksichtigen, wird zum Abstimmen des Reglerparameters $K_I$ der in Fig. 8 gezeigte zweistufenförmige Führungsgrößenverlauf an den PIV-Regler 4 gegeben. Hierbei sind die beiden Stufenhöhen gleich groß und entsprechen in etwa einer kleinen Stufenhöhe, wie sie beim Abstimmen der Reglerparameter $K_P$ und $K_V$ eingegeben wird.

Mit durchgezogener Linie ist der zeitliche Verlauf der Regelgröße, hier der Positionsverlauf, eingezeichnet, der jeweils pro Stufenabschnitt einen Überschwingwert $x_{max1}$ bzw. $x_{max2}$ zeigt. Ferner ist für jeden Stufenabschnitt die Stillstand-Zeit $T_{S1}$ bzw. $T_{S2}$ eingezeichnet, die der PIV-Regler 4 benötigt, um den Positionsfehler innerhalb eines vorgegebenen Schrankenbereiches $\alpha$ bezüglich des Führungsgrößenverlaufes zu begrenzen.

Die Überschwingwerte $x_{max1}$ und $x_{max2}$ werden nach dem in Fig. 7 gezeigten Verfahren auf die jeweilige Stufenhöhe normiert. Nachdem die beiden Stufen des zweistufenförmigen Führungsgrößenverlaufes an den PIV-Regler 4 gegeben worden sind, wird die Regelstrecke 6 wieder in ihre Ausgangsposition gebracht.

Danach ist der Überschwingwert $x_{max2}$ größer als der Überschwingwert $x_{max1}$, da der Spindelantrieb bereits in die nächstfolgende Vorschubrichtung vorgespannt ist. Wird der Spindelantrieb in seine Ausgangsposition zurückgefahren, so ist er jedoch in entgegengesetzter Richtung vorgespannt, so daß bei erneutem Durchfahren des zweistufenförmigen Führungsgrößenverlaufes die zum Erreichen der ersten Stufe zu überwindende Reibung größer ist.

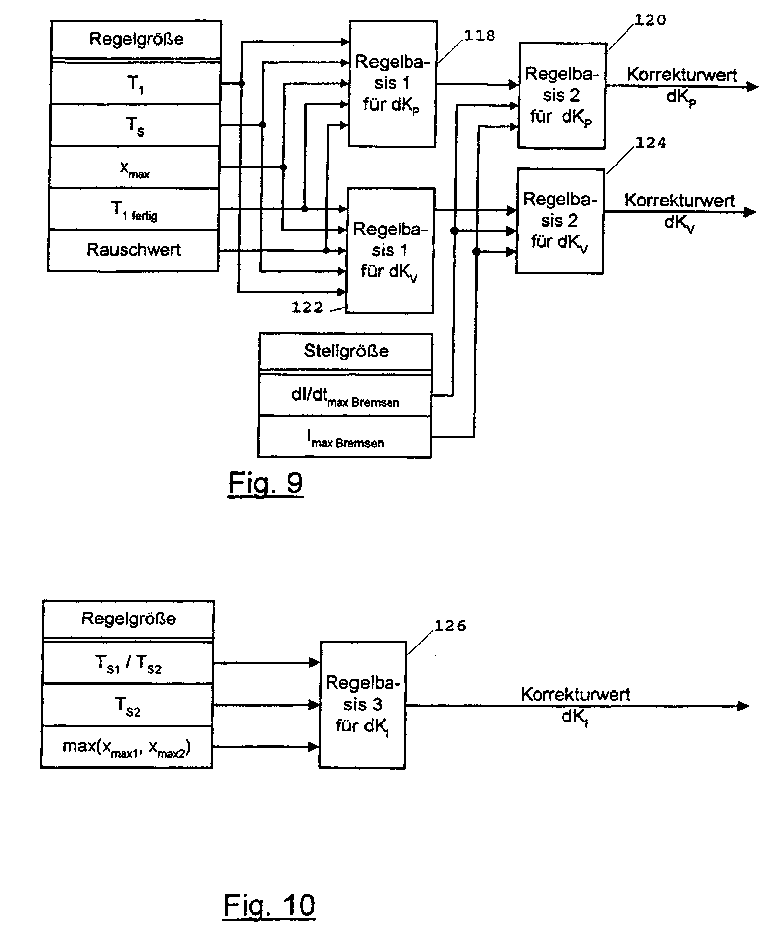

In einer - näher im Zusammenhang mit Fig. 10 beschriebenen - Regelbasis 126 zum Abstimmen des Reglerparameters $K_I$ können somit folgenden physikalischen Größen miteinfliessen: Ein Überschwingwert, der dem Maximalwert der beiden Überschwingwerte $x_{max1}$ und $x_{max2}$ entspricht, eine der beiden Zeiten $T_{S1}$ oder $T_{S2}$ sowie entweder die andere Zeit $T_{S2}$ bzw. $T_{S1}$ oder ein Zeitverhältnis $T_{S1}/T_{S2}$. Dieses Zeitverhältnis ist ein Maß für die Änderung der Reaktionen des Regelsystems auf die erste und die zweite Stufe des zweistufenförmigen Führungsgrößenverlaufes. Die Regelbasis 126 ist daher so ausgelegt, die beiden Stillstand-Zeiten $T_{S1}$ und $T_{S2}$ anzugleichen und die beiden Überschwingwerte $x_{max1}$ und $x_{max2}$ zu minimieren (aber größer als 1 zu halten).

Fig. 9 zeigt verschiedene Regelbasen des erfindungsgemäßen Fuzzy-Reglers 8 aus Fig. 1 mit den entsprechend zugeordneten aus der Regel- bzw. Stellgröße abgeleiteten physikalischen Größen zum Abstimmen des P- und des V-Reglergliedes. Hierzu ist die in Fig. 1 gezeigte erste Regelbasis 22 in zwei erste Regelbasen 118 und 122 jeweils zum Abstimmen des Reglerparameters $K_P$ bzw. $K_V$ aufgeteilt. In die Regelbasen 118 und 122 fließen jeweils die aus der Regelgröße abgeleiteten physikalischen Größen $T_1$, $T_S$, $x_{max}$, $T_{1\,fertig}$ und der Rauschwert ein. Die ersten Regelbasen 118 und 122 ermitteln Korrekturwerte $dK_P$ und $dK_V$ derart, als ob keine technischen Grenzen der Regelstrecke 6 (insbesondere des Treibers) vorliegen würden. Mit einem Satz zweiter Regelbasen - einer zweiten Regelbasis 120 für den Korrekturwert $dK_P$ und einer zweiten Regelbasis 124 für den Korrekturwert $dK_V$ - werden dann die von den ersten Regelbasen 118 und 122 gelieferten Korrekturwerte $dK_P$ und $dK_V$ derart korrigiert, daß diese technischen Grenzen berücksichtigt werden und damit Nichtlinearitäten in der Regelstrecke 6 ausgeschlossen werden können. Hierzu fließen in die beiden zweiten Regelbasen 120 und 124 jeweils die aus der Stellgröße abgeleiteten physikalischen Größen $dI/dt_{max\ Bremsen}$ und $I_{max\ Bremsen}$ ein. Die von den beiden zweiten Regelbasen 120 und 124 ausgegebenen defuzzifizierten Korrekturwerte $dK_P$ und $dK_V$ werden anschließend über die Stellgrößen-Verbindung 16 an den PIV-Regler 4 gegeben.

Wie oben erwähnt, geben die aus der Stellgröße abgeleiteten physikalischen Größen $dI/d_{tmax\ Bremsen}$ und $I_{max\ Bremsen}$ an, ob eine Sättigung des in der Regelstrecke 6 enthaltenen Treibers auftreten kann. Die aus der Regelgröße abgeleiteten physikalischen Größen - $T_1$, $T_S$, $x_{max}$, $T_{1\ fertig}$ und der Rauschwert - beschreiben unmittelbar die Reaktion des Regelsystems auf den angelegten Führungsgrößenverlauf.

Fig. 10 zeigt schematisch eine Regelbasis 126 des Fuzzy-Reglers 8 zum Abstimmen des Reglerparameters $K_I$ des Integralreglergliedes mit den entsprechenden aus der Regelgröße abgeleiteten physikalischen Größen. Die aus der Regelgröße in die Regelbasis 126 zum Ermitteln des Korrekturwertes $dK_I$ einfließenden physikalischen Größen sind $T_{S1}/T_{S2}$, $T_{S2}$ und der maximale Wert aus den beiden Überschwingwerten $x_{max1}$ und $x_{max2}$.

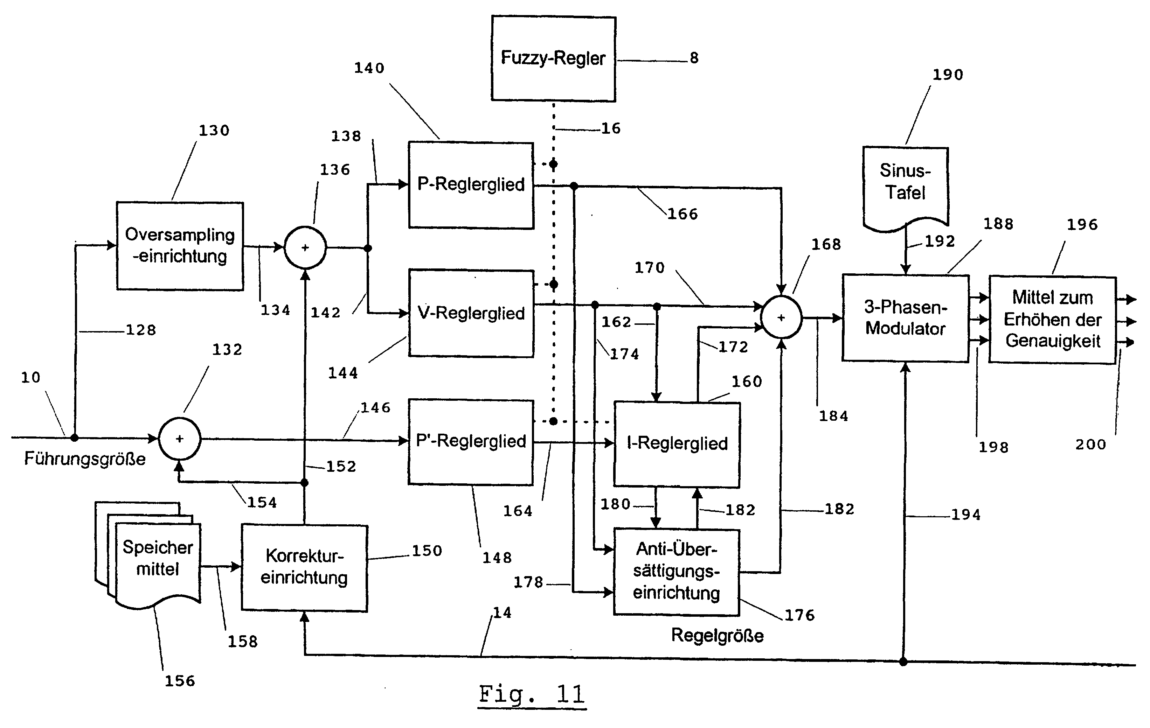

Fig. 11 zeigt schematisch den Aufbau eines bevorzugten Ausführungsbeispiel eines erfindungsgemäßen Reglers. Die von der CNC 2 in Fig. 1 stammende Führungsgrößen-Verbindung 10 ist mit einem Summierglied 132 sowie über eine Abzweigung 128 mit einer Oversampling-Einrichtung 130 verbunden. Die Oversampling-Einrichtung 130 dient zum Oversampling der über die Führungsgrößen-Verbindung 10 und 128 erhaltenen Führungsgrößenwerte. Hierzu ist der PIV-Regler 4 beispielsweise mit einem n-fach höheren Takt getaktet als die CNC 2. Innerhalb einer Taktzeit der CNC 2 kann die Oversamplingeinrichtung 130 dann n-1 Werte im Takt des PIV-Reglers 4 interpolieren und damit die interne Rechengenauigkeit des PIV-Reglers 4 erhöhen.

Beispielsweise kann die CNC 2 den PIV-Regler 4 mit zwei eine Taktzeit der CNC 2 auseinanderliegenden Führungsgrößenwerten anweisen, die Regelstrecke 6 von der Position $x_1$ zur Position $x_2$ zu fahren. Dies entspricht einer Geschwindigkeit $v=(x_2-x_1)/T_{CNC}$, wobei $T_{CNC}$ die Taktzeit der CNC 2 ist. Die Oversamplingeinrichtung 130 teilt die erforderliche Positionsverschiebung $x_2-x_1$ in n kleinere Positionsverschiebungen $(x_2-x_1)/n$ auf, die der PIV-Regler 4 innerhalb einer Taktzeit $T_{CNC}$ der CNC 2 jeweils n-mal mit seiner Taktzeit $T_{PIV}$ unter der Geschwindigkeit v ausführen soll. Diese fein aufgelösten Positionsschritte $(x_2-x_1)/n$ gibt die oversamplingeinrichtung 130 an einzelne Reglerglieder des PIV-Reglers 4 weiter. Hierzu ist die Oversamplingeinrichtung 130 über eine Verbindung 134 mit einem Summierglied 136 verbunden, welches wiederum jeweils über eine Verbindung 138 mit einem Lagereglerglied 140 und über eine Verbindung 142 mit einem Geschwindigkeitsreglerglied 144 verbunden ist. Der PIV-Regler 4 enthält ferner ein weiteres Lagereglerglied 148, das über das Summierglied 132 mittels einer Verbindung 146 direkt mit der Führungsgrößen-Verbindung 10 verbunden ist. Das Lagereglerglied 148 erhält somit die Führungsgrößenwerte mit der Abtastrate der CNC 2. Die Soll-Position $(x_1+(x_2-x_1)*i/n)$ ist danach um einen Faktor n reduziert (vorausgesetzt, daß die Treiberstufe in der Regelstrecke 6 nicht gesättigt ist). Dank der Oversamplingeinrichtung 130 ist die Reaktionszeit des Regelsystems somit erhöht und der durch das Nachfahren der Regelstrecke in einem Mehrachsensystem verursachte Fehler reduziert.

Die über die Regelgrößen-Verbindung 14 erhaltene Regelgröße $x_{gemessen,\ i}$ wird an eine Korrektureinrichtung 150 gegeben, welche die Regelgrößenwerte $x_{gemessen,\ i}$ entsprechend korrigiert und die korrigierten Werte jeweils über eine Verbindung 152 an das Summierglied 136 und über eine Verbindung 154 an das Summierglied 132 ausgibt. Die beiden Summierglieder 132 und 136 sind in Fig. 11 nur als Gedankenstütze zu verstehen, da die Differenzbildung aus Führungsgröße und Regelgröße in den einzelnen Reglergliedern 140, 144 und 148 stattfindet (siehe obige Berechnung der Ausgabewerte $P_{Ausgabe,\ i}$ und $V_{Ausgabe,\ i}$).

Die Korrektureinrichtung 150 dient zum Korrigieren mechanischer Ungenauigkeiten der Regelstrecke 6. Mechanische Ungenauigkeiten können beispielsweise durch das Antriebslager, das Riemengetriebe 34, die Spindel 36 etc. verursacht werden. Damit entspricht die lineare Position der vom Spindelantrieb geführten Einheit nicht genau der Position, die beispielsweise aus der gemessenen Lage des Antriebs 33 ableitbar ist. Den größten Einfluß haben die sog. Ausrichtungs-Fehler der Spindel, d.h. die Spindel verläuft nicht exakt in Richtung der Koordinatenachse. Dies führt insbesondere zu Ausrichtungsfehlern in Mehrachsensystemen, wo beispielsweise eine ungenau in x-Richtung ausgerichtete Spindel die Position einer in y-Richtung geführten Einheit beeinflußen kann. Andere Fehlerquellen können in den einzelnen Lagern der Antriebe liegen. Um solche Linearitätsund Ausrichtungs-Fehler zu korrigieren, wird die Position der vom Spindelantrieb geführten Einheit beispielsweise mittels eines Laser-Werkzeuges vermessen und entsprechende Korrekturwerte in einem geeigneten Speichermittel 156 gespeichert. Das Speichermittel 156 ist über eine Verbindung 158 mit der Korrektureinrichtung 150 derart verbunden, daß die Korrektureinrichtung auf die Daten des Speichermittels 156 zurückgreifen und die Regelgrößenwerte entsprechend korrigieren kann. Damit können beispielsweise Positionier-Genauigkeiten in der Größenordnung von Mikrometern erzielt werden.

Der PIV-Regler 4 enthält ein Integralreglerglied 160 in Fig. 11, dessen Eingang über eine Verbindung 162 mit dem Ausgang des Geschwindigkeitsreglergliedes 144 und über eine Verbindung 164 mit dem Ausgang des Lagereglergliedes 148 verbunden ist. Das Integralreglerglied 160 kann seinen Ausgabewert beispielsweise folgendermaßen berechnen:

$$I_{\text{Ausgabe, i}} = I_{\text{Ausgabe, i-1}} + K_I * (P_{\text{Ausgabe, i}} + V_{\text{Ausgabe, i}}),$$

wobei

$I_{\text{Ausgabe, i}}$ die im Takt des PIV-Reglers 4 ausgegebenen Ausgabewerte des Integralreglergliedes 160,
$K_I$ der Reglerparameter des Integralreglergliedes 160,
$P_{\text{Ausgabe, i}}$ der im Takt der CNC 2 erhaltene Ausgabewert des Lagereglergliedes 148, und
$V_{\text{Ausgabe, i}}$ der im Takt des PIV-Reglers 4 erhaltene Ausgabewert des Geschwindigkeitsreglergliedes 144 ist.

Das Integralreglerglied 160 wird somit mit den Ausgabewerten des Lage- 148 und des Geschwindigkeitsreglergliedes 144 gefüttert. Wie aus obiger Berechnung ersichtlich, fliessen die Positions- und Geschwindigkeitsfehler mit derselben relativen Gewichtung in den Ausgabewert $I_{\text{Ausgabe, i}}$ des Integralreglergliedes ein, wie sie in den jeweiligen Ausgabewert $P_{\text{Ausgabe, i}}$ bzw. $V_{\text{Ausgabe, i}}$ des Lage- 148 bzw. Geschwindigkeitsreglerglied 144 einfließen.

Dabei hilft die Integration des Geschwindigkeitsfehlers, die statische Reibung beim Starten des Antriebes 33 aus dem Stillstand zu überkommen. Der unmittelbar auftretende große Geschwindigkeitsfehler beim anfänglichen Sprung eines stufenförmigen Führungsgrößenverlaufes (die Soll-Geschwindigkeit müßte theoretisch unendlich hoch sein, die Ist-Geschwindigkeit ist jedoch Null) trägt nämlich stark zur Akkumulation des Integralreglergliedes 160 bei. Damit verkürzt das Integralreglerglied 160 die zum Überwinden der Reibung erforderliche Zeit, indem es relativ schnell einen großen Ausgabewert $I_{\text{Ausgabe, i}}$ auf die Regelstrecke 6 gibt. Das Ergebnis einer Integration des Geschwindigkeitsfehlers ist nämlich der um eine Konstante verschobene Positionsfehler. Diese Konstante wird in Folge verwendet, den Antrieb der Regelstrecke 6 mit einem Drehmoment "vorzuspannen", das die Reibung kompensiert.

Die Integration des Positionsfehlers durch Akkumulation des Ausgabewertes $P_{\text{Ausgabe, i}}$ des Lagereglergliedes 148 vermindert im wesentlichen den Einfluß der dynamischen Reibung. Das Integralreglerglied 160 akkumuliert hierzu die Differenz zwischen der aktuell im Takt des PIV-Reglers 4 gemessenen Ist-Position $x_{\text{gemessen, i}}$ und der im Takt der CNC 2 bereitgestellten Soll-Position $x_1$ bzw. $x_2$, d.h. die an das Integralreglerglied gelieferte Soll-Position ist nicht überabgetastet in Soll-Positionen $x_1+(x_2-x_1)*i/n$. Mit dieser Maßnahme wird der Positionsfehler somit künstlich erhöht, was zum Vorteil hat, daß bei Bewegungen mit konstanter Geschwindigkeit die vom Spindelantrieb angetriebene Einheit weniger stark hinter ihrer Soll-Position $x_1+(x_2-x_1)*i/n$ "hinterherhinkt".

Der Ausgang des Lagereglergliedes 140 ist über eine Verbindung 166 mit einem ersten Eingang eines Summiergliedes 168, der Ausgang des Geschwindigkeitsreglergliedes 144 über eine Verbindung 170 mit einem zweiten Eingang des Summiergliedes 168 und der Ausgang des Integralreglerglied 160 über eine Verbindung 172 mit einem dritten Eingang des Summiergliedes 168 verbunden. Das Summierglied 168 summiert die jeweiligen Ausgabewerte der Reglerglieder 140, 144 und 160 zu einem Gesamtausgabewert.

Der PIV-Regler 4 enthält ferner eine Anti-Übersättigungseinrichtung 176, die dem Integralreglerglied 160 zugeordnet ist. Der Eingang der Anti-Übersättigungseinrichtung 176 ist hierzu über eine Verbindung 174 mit dem Ausgang des Geschwindigkeitsreglergliedes 144, über eine Verbindung 178 mit dem Ausgang des Lagereglergliedes 140 und über eine Verbindung 180 mit dem Ausgang des Integrationsreglergliedes 160 verbunden. Über diese Verbindungen 174, 178 und 180 erhält die Anti-Übersättigungseinrichtung 176 jeweils die Ausgabewerte $P_{\text{Ausgabe, i}}$, $V_{\text{Ausgabe, i}}$ und $I_{\text{Ausgabe, i}}$ der einzelnen Reglerglieder 140, 148 und 160 und addiert diese zu einem Gesamtwert.

Die Anti-Übersättigungseinrichtung 176 vergleicht den Gesamtwert anschließend mit einem vorgegebenen Maximalwert. Liegt der Gesamtwert über dem Maximalwert, so wird die letzte Akkumulation des Integralreglergliedes 160 rückgängig gemacht. Hierzu ist ein Ausgang der Anti-Übersättigungseinrichtung 176 über eine Verbindung 182 mit einem Eingang des Integralreglergliedes 160 verbunden. Außerdem subtrahiert die Anti-Übersättigungseinrichtung 176 in diesem Fall den letzten Ausgabewert $I_{\text{Ausgabe, i}}$ des Integralreglergliedes 166 von dem Gesamtausgabewert des Summiergliedes 168. Hierzu ist der Ausgang der Anti-Übersättigungseinrichtung 176 über eine Verbindung 184 mit einem weiteren Eingang des Summiergliedes 168 verbunden.

Sollte der Gesamtwert nach der Subtraktion des Ausgabewertes$I_{\text{Ausgabe, i}}$ des Integralreglergliedes 160 weiterhin größer als der Maximalwert sein, so kann die Anti-Übersättigungseinrichtung 176 das Summierglied 168 über die Verbindung 184 veranlassen, den Gesamtausgabewert auf diesen Maximalwert zu setzen.

Die Anti-Übersättigungseinrichtung 176 verhindert damit eine zu starke Akkumulation des Integralreglergliedes 160, das sonst einen zu großen Regelbeitrag liefern würde. Eine derartig große Akkumulation tritt insbesondere dann auf, wenn stufenförmige Führungsgrößenverläufe mit großen Stufenhöhen an den PIV-Regler 4 gegeben werden, und kann dazu führen, daß die in der Regelstrecke 6 enthaltene Treiberstufe in ihren Sättigungsbereich gelangt. Folglich zeigt das gesamte Regelsystem wiederum ein nichtlineares Verhalten, was zu unerwünschten Instabilitäten oder wenigstens zu einem unerwünschten starken Überschwingen der Regelgröße über die Führungsgröße führt. Dies wird durch die Anti-Übersättigungseinrichtung 176 verhindert.

Die Anti-Übersättigungseinrichtung 176 unterstützt auch den Fuzzy-Regler 8 beim Abstimmen des Reglerparameters $K_I$ des Integralreglergliedes 160, da dieser einen größeren Wert für den Reglerparameter $K_I$ zulassen kann, ohne Gefahr zu laufen, daß die Treiberstufe überlastet wird (ev. momentan durch einen zu großen Reglerparameter $K_I$ verursachte Überlastungen werden von der Anti-Übersättigungseinrichtung 176 auch kurzzeitig abgeschnitten). Mit dieser Maßnahme kann insbesondere die statische Reibung noch effektiver kompensiert werden.

In dem Regler aus Fig. 11 sind zur schnellen reglerinternen Berechnung dreier Phasen (optional) noch ein 3-Phasen-Modulator 188 mit einer über eine Verbindung 192 vorgeschalteten Sinus-Tabelle 190 vorgesehen. Diese werden nur im Fall eines 3-Phasen-Motors (z.B. ein bürstenloser Elektromotor) benötigt. Sie dienen dazu, den (skalaren) Stellwert aus dem Summierglied 168 auf geeignete Weise in die drei Phasenkomponenten aufzuteilen. In der Sinustafel 190 sind beispielsweise die zur Berechnung der 3-Phasen erforderlichen Sinuswerte tabellisiert. Der 3-Phasen-Modulator 188 ist ferner zur Bestimmung der drei Phasen über eine Verbindung 194 mit der Regelgrößen-Verbindung 14 verbunden (vgl. auch Fig. 1) und erhält somit über die Verbindung 14, 194 die momentan gemessene Position $x_{gemessen, i}$, die er seinen Phasen-Berechnungen zugrunde legt.

Üblicherweise sind in Werkzeugmaschinen nicht alle Antriebe gleichartig ausgebildet. Gewöhnlich gibt es, insbesondere in Elektroerosionsmaschinen, Hauptachsen (z.B. X,Y) und Hilfsachsen (z.B. U,V), die verschieden stark belastet sind. Aus unterschiedlichsten Gründen (Kosten, Handhabung, Wirtschaftlichkeit etc.) ist es interessant, baugleiche Treiberstufen zu verwenden, die alle genannten Antriebe ansteuern. Ein derartiger Treiberstufen-Typ sollte daher insbesondere in seinen Ausgangsgrößen flexibel an den jeweiligen Antrieb anpaßbar sein, also eine große dynamische Bandbreite aufweisen. Ein von einer Treiberstufe auszugebender Strom wird üblicherweise aus einem an die Treiberstufe gegebenen digitalen Eingabe-Wert abgeleitet. Dieser digitale Eingabe-Wert muß somit zuvor in einen analogen Stromwert gewandelt werden, wozu gewöhnlich ein D/A-Wandler verwendet wird. In einer Treiberstufe mit der genannten großen dynamische Bandbreite sollte die Bezugsspannung des D/A-Wandlers daher programmierbar sein. Auf diese Weise ist es möglich, die unterschiedlichen vom jeweiligen Antrieb 33 geforderten Strombereiche unter Ausnutzung des gesamten vom PIV-Regler 4 gelieferten digitalen Wertebereichs zu liefern. Eine Ein-Bit-Änderung des digitalen Ausgabewertes des PIV-Reglers 4 enspricht dann immer einer kleinstmöglichen Stromänderung der Treiberstufe für den jeweiligen Antrieb. Mit der Programmierung der Bezugsspannung wird u.a. auch das sog. Positionsrauschen vermindert (wenn der Antrieb 33 sich im Stillstand befindet), da nunmehr die durch eine Ein-Bit-Änderung des digitalen Eingabe-Wertes verursachten Stromänderungen für jeden Antrieb 33 minimal ist.

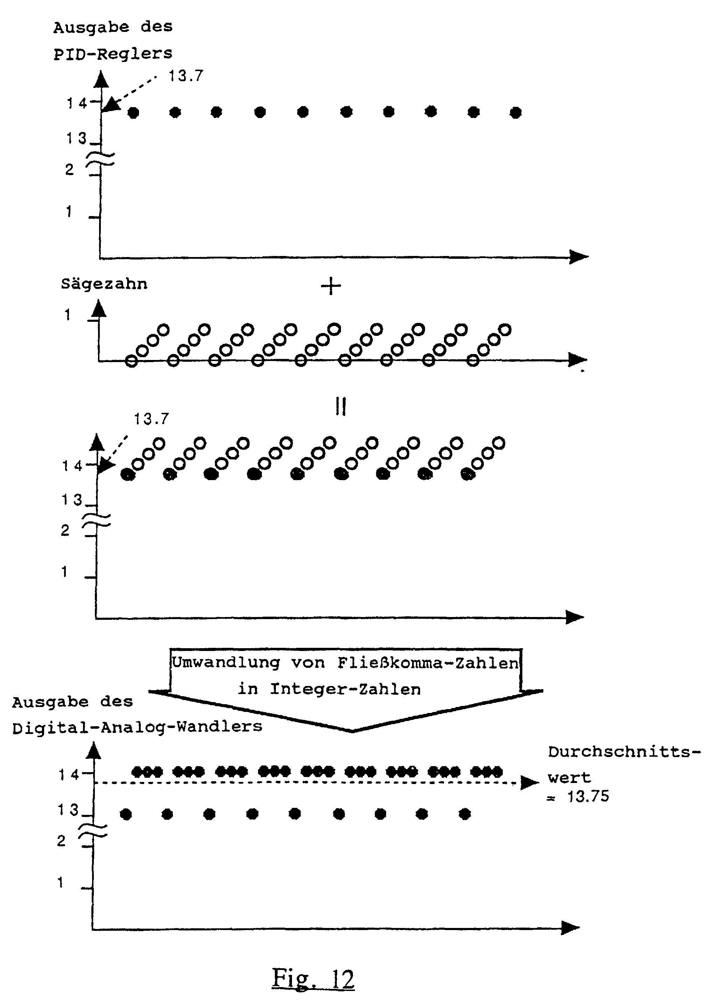

Eine weitere Maßnahme, dieses unerwünschte Positionsrauschen zu vermindern, liegt darin, die Auflösung des D/A-Wandlers zu erhöhen, d.h. die Anzahl an möglichen Bit-Werten (gewöhnlich werden 8-Bit-Werte verwendet) zu erhöhen. Die drei Phasen werden dazu vom Ausgang des 3-Phasen-Modulators 188 über jeweils eine Verbindung 198 einem Mittel 196 zum Erhöhen der Genauigkeit zugeführt. Die Mittel 196 zum Erhöhen der Genauigkeit sind wiederum jeweils über eine Verbindung 200 mit jeweils einem D/A-Wandler (nicht gezeigt) verbunden. Die Funktionsweise dieser Mittel 196 zum Erhöhen der Genauigkeit soll weiter unten anhand Fig. 12 näher erläutert werden.

Ferner ist in Fig. 11 noch der Fuzzy-Regler 8 zum Abstimmen der Reglerparameter $K_P$, $K_V$ und $K_I$ der einzelnen Reglerglieder 140, 144, 148 und 160 eingezeichnet. Die abgestimmten Reglerparameter $K_P$, $K_V$ und $K_I$ bzw. ihre Korrekturwerte $dK_P$, $dK_V$ und $dK_I$ gibt der Fuzzy-Regler über die Fuzzystellgrößen-Verbindung 16 an die einzelnen Reglerglieder 140, 144, 148 und 160 weiter. Dabei wird der Fuzzy-Regler nur auf Anweisung eines Bedieners und/oder der CNC 2 eingeschaltet, führt anschließend genau einen Abstimmvorgang durch und schaltet sich am Ende selbstständig wieder aus, so daß der PIV-Regler 4 wieder in seinem Normalzustand arbeiten kann. Vorzugsweise kann der Fuzzy-Regler die Reglerparameter $K_P$, $K_V$ und $K_I$ nur dann abstimmen, wenn der PIV-Regler 4 nicht gleichzeitig von der CNC 2 angeforderte "Regelaufträge" erfüllen muß. Die abgestimmten Parameter werden dann in einem nichtflüchtigen Speicher gespeichert und können während des Normalbetriebes des PIV-Reglers 4 nicht verändert werden. Es ist andererseits aber ebenso möglich, beispielsweise bei von der CNC 2 angeforderten niedrigpriorisierten "Regelaufträgen" gleichzeitig die Reglerparameter abzustimmen, wobei der Führungsverlaufgeber 18 dann nur solche Führungsverläufe an den PIV-Regler gibt, die innerhalb vorgegebener Toleranzschwellen eines niedrigpriorisierten "Regelauftrages" liegen.

Es sei ausdrücklich darauf hingewiesen, daß der in Fig. 12 gezeigte PIV-Regler 4 auch ohne den Fuzzy-Regler 8 vorteilhaft einsetzbar ist, insbesondere die dortige Oversamplingeinrichtung 130, die Korrektureinrichtung 150, die Anti-Übersättigungseinrichtung 176, die Mittel 196 zum Erhöhen der Genauigkeit und die anderen genannten Maßnahmen zum Verbessern des Regelverhaltens des PIV-Reglers 4 jeweils sowohl unabhängig voneinander als auch in Kombination miteinander - mit oder ohne Fuzzy-Regler 8 - bei dem PIV-Regler 4 einsetzbar sind.

Fig. 12 zeigt dazu verschiedene Diagramme mit zeitlich aufeinanderfolgenden Ausgabewerten des PIV-Reglers 4 und des Mittels 196 zum Erhöhen der Genauigkeit. Das oberste Diagramm zeigt beispielsweise vom PIV-Regeler 4 zeitlich mit seinem Takt ausgegebene Ausgabewerte bzw. vom 3-Phasen-Modulator 188 ermittelte Phasenwerte. Die Berechnung dieser Ausgabewerte bzw. Phasenwerte erfolgt üblicherweise in Fließkomma-Zahlen mit einer bestimmten Anzahl an Nachkommastellen. Diese Fließkomma-Zahlen müßten vor Eingabe an den D/A-Wandler in Integer-Zahlen umgewandelt, d.h. ihre Nachkommastellen abgeschnitten oder gerundet werden. Der DA-Wandler würde beispielsweise anstatt mit dem Wert 13,7 mit dem Wert 14 arbeiten und diesen in einen Analogwert umwandeln.

Die Mittel 196 zum Erhöhen der Genauigkeit erzeugen nunmehr in einem ersten Schritt eine Folge von Zahlenwerten zwischen 0 und 1 mit einer gegenüber der Abtastrate des PIV-Reglers 4 nochmals erhöhten Abtastrate, was im zweiten Diagramm in Fig. 12 gezeigt ist. Diese Zahlenwert-Folge wird in einem zweiten Schritt (drittes Diagramm in Fig. 12) auf einen Ausgabewert des PIV-Reglers 4 addiert. In Fig. 12 entsteht damit eine Art Sägezahn-Verlauf, dessen niedrigster Wert gerade dem Ausgabewert des PIV-Reglers entspricht (in dem dritten Diagramm als ausgefüllter Punkt dargestellt) und dessen Flanken-Werte die mit der erhöhten Abtastrate ausgegebenen - auf den jeweils einen Ausgabewert addierten - Zahlenwerte der Zahlenwert-Folge sind. Die Höhendifferenz der Flanke entspricht dabei genau einem Bit des D/A-Wandlers. In einem dritten Schritt werden die einzelnen noch in Fließkomma-Zahlen dargestellten Werte des Sägezahn-Verlaufes in Integer-Zahlen umgewandelt. Hierzu werden üblicherweise die Nachkommastellen der Fließkomma-Zahlen abgeschnitten. Das Ergebnis dieses Abschneidens ist im vierten Diagramm der Fig. 12 gezeigt. Der zeitlich gemittelte Durchschnittswert dieser in Digitalwerten z.B. von 0-255 vorliegenden Eingabewerte an den D/A-Wandler, die dank der erhöhten Abtastrate zahlenmäßig gegenüber der Ausgabewerte des PIV-Reglers vermehrt sind, entspricht nunmehr ungefähr dem vom PIV-Regler 4 in Fließkomma-Zahlen ausgegebenen Ausgabewert. Die Treiberstufe und der nachgeschaltete Antrieb 33 bilden eine Art Tiefpaß zur Durchführung dieser zeitlichen Durchschnittsbildung.

Die Auflösung steigt im zeitlichen Mittel also mit steigender Abtastrate, mit welcher die Zahlenwert-Folge (im zweiten Diagramm dargestellt) gebildet wird. In dem in Fig. 12 dargestellten Beispiel ist die Auflösung somit im zeitlichen Mittel um 2 Bit gestiegen, d.h. um den Faktor 4. Vorzugsweise sollte die Abtastrate der Zahlenwert-Folge ein Vielfaches der Abtastrate des PIV-Reglers 4 sein. Nach oben ist die erhöhte Abtastrate der Zahlenwert-Folge dadurch beschränkt, daß die Abschneidefrequenz des als Tiefpaßfilter wirkenden Treibers und Antriebes erreicht und die Durchschnittswertbildung somit nicht mehr ausgeführt wird.

Es sei bemerkt, daß die Zahlenwert-Folge nicht unbedingt Zahlenwerte enthalten muß, die auf den Flanken eines Sägezahn-Verlaufes liegen müssen. Jede andere Zahlenwert-Folge mit statistisch gleich verteilten Zahlenwerten kann ebensogut verwendet werden. Auch ist in Fig. 12 zwecks besserem Verständnis der Ausgabewert des PIV-Reglers 4 über mehrere Taktzyklen des PIV-Reglers 4 als konstant dargestellt. Ist er nicht konstant, so können die Mittel 196 zum Erhöhen der Genauigkeit kleine Fehler erzeugen, die jedoch immer kleiner als 1 Bit sind. Dieser Fall tritt gewöhnlich jedoch nicht ein, da das Positionsrauschen nur dann stört, wenn der Motor still steht, d.h. der Ausgabewert des PIV-Reglers konstant bleibt.

Eine weitere Maßnahme zum Vermindern des Positionsrauschens liegt darin, den Reglerparameter $K_V$ des Geschwindigkeitsreglergliedes 144 zu reduzieren (beispielsweise auf ein Drittel seines Wertes), wenn sowohl der Positions- als auch der Geschwindigkeitsfehler (Abweichung des Ist- vom Sollwert) kleiner oder gleich einem minimalem Wert ist, der dem kleinsten vom D/A-Wandler o.ä. auflösbaren Wert entspricht, beispielsweise eine Ein-Bit-Änderung. Positionsrauschen wird vor allem durch diese Ein-Bit-Änderungen hervorgerufen. Der PIV-Regler 4 gibt zwar dank seiner in Fließkomma-Zahlen ausgeführten Berechnung einen kleineren als einen einer Ein-Bit-Änderung entsprechenden Ausgabewert aus, der D/A-Wandler kann aber aufgrund seiner internen Auflösungsbeschränkung (nur Integer-Zahlenverarbeitung) lediglich einen einer Ein-Bit-Änderung entsprechenden Ausgabewert (Strom) erzeugen.

So können beispielsweise derartige Ein-Bit-Änderungen vom optischen Sensorsystem 38 verursacht werden. Befindet sich der Antrieb 33 im Stillstand und das Sensorsystem 38 zeigt eine Positionsänderung in der Größenordnung von einem Bit an, so wird der Antrieb 33 in die Stillstands-Position im wesentlichen vom Geschwindigkeitsreglerglied 144 zurückgeregelt, da der einem Bit entsprechende Wert des Geschwindigkeitsfehlers größer als der des Positionsfehlers ist.

Der momentane Geschwindigkeitsfehler ist nämlich die einem Bit entsprechende Positionsänderung pro Taktzeit des PIV-Reglers 4. Je größer der Reglerparameter $K_V$ des Geschwindigkeitsreglergliedes 144 ist, desto höher ist auch das Positionsrauschen im Stillstand, da die Reaktion auf derartige Fehler stärker ist. Mit dem Reduzieren des Reglerparameters $K_V$ zum Zeitpunkt, an dem sich der Antrieb 33 im Stillstand befindet, wird das Positionsrauschen somit vorteilhaft reduziert, ohne daß meßbare Änderungen im dynamischen Regelverhalten des PIV-Reglers 4 auftreten.

Eine weitere Maßnahme zum Vermindern des Positionsrauschens liegt darin, das aus der Regelgröße abgeleitete Geschwindigkeitssignal zu filtern. Hierzu muß allerdings der Reglerparameter $K_V$ des Geschwindigkeitsreglergliedes 144 entsprechend vergrößert werden, um dieselbe Reaktionsgeschwindigkeit auf Positionsänderung im Führungsgrößenverlauf zu erzielen. Bei der Abstimmung muß hier also ein Kompromiß zwischen einem zu stark vergrößerten Reglerparameter $K_V$ und der Filterung des Geschwindigkeitssignales gefunden werden. Darüberhinaus muß weiterhin berücksichtigt werden, daß die 1-Bit-Positionsschwankungen normalerweise niederfrequenter Natur sind und daher von der mechanischen Zeitkonstante der Regelstrecke 6 weniger stark gefiltert werden.

Eine weitere Maßnahme zum Verhindern des Positionsrauschens liegt darin, das Sensorsystem 38 selbst in seiner Auflösung zu verbessern.

Ebenso ist bei der internen Umrechnung der Fließkomma-Zahlen in Integer-Zahlen zu berücksichtigen, daß auf eine Integer-Zahl immer ein gleichgroßes Intervall mit Fließkomma-Zahlen fällt. Insbesondere in gängigen Programmiersprachen ist die Abbildung auf die Integer-Zahl "Null" ungleichförmig, da das gesamte Intervall an Fließkomma-Zahlen von -1 bis +1 - also ein Intervall mit einer Intervalllänge von 2 - auf die Integer-Zahl "0" abgebildet wird, während die übrigen auf jeweils eine Integer-Zahl abgebildeten Intervalle nur die Länge 1 besitzen (das Intervall mit Fließkomma-Zahlen von +1 bis +2 wird auf die Integer-Zahl +1 abgebildet, etc). Damit wird aber 50% der Genauigkeit in dem Intervall von -1 bis +1 verloren, das zudem noch den Bereich für einen Antriebs-Stillstand beschreibt. Ein Verlust an Genauigkeit in diesem Bereich führt also unmittelbar zu einem unerwünschten Positionsrauschen. Wenn der Antrieb beispielsweise seine korrekte Position verändert, und der PIV-Regler 4 als Reaktion darauf seine in Fließkomma-Zahlen ausgegebene Ausgabewerte von z.B. -0,6 auf 0,7 ändert, ändert sich der zum Eingeben an den D/A-Wandler entsprechend umgewandelte Integer-Zahlenwert nicht. Intern ändert sich der Fließkomma-Zahlenwert also um einen Zahlenwert größer als 1, was bei der anschließenden Umwandlung allerdings unberücksichtigt bleibt.

**Patentansprüche**

1. Verfahren zum Abstimmen wenigstens eines Reglerparameters ($K_P$, $K_V$, $K_I$) eines Reglers (4), der wenigstens ein Proportional- (140;148), Differenzier- (144) und/oder Integralreglerglied (160) aufweist und eine Regelstrecke (6) regelt, mittels einer Fuzzy-Abstimmungseinheit (8), der zum Abstimmen der Reglerparameter ($K_P$, $K_V$, $K_I$) sowohl die Regelgröße als auch die Stellgröße des Reglers (4) als ihre Eingangsgrößen zugeführt werden, und die die abzustimmenden Reglerparameter ($K_P$, $K_V$, $K_I$) als ihre Ausgangsgrößen ausgibt, bei welchem dem Regler (4) für den Abstimmvorgang ein vorgegebener Führungsgrößenverlauf als Eingangsgröße zugeführt wird, **dadurch gekennzeichnet, daß** der wenigstens eine Reglerparameter ($K_P$, $K_V$, $K_I$) mittels wenigstens einer in der Fuzzy-Abstimmungseinheit (8) aufgestellten Regelbasis (22, 26) derart abgestimmt wird, daß während des zugeführten Führungsgrößenverlaufs außerhalb einer etwaigen Phase der Übersteuerung der Regelstrecke (6) diese unter Berücksichtigung ihrer technischen Grenzen immer im linearen Bereich durchfahren wird.

2. Verfahren nach Anspruch 1, **dadurch gekennzeichnet, daß** die Reglerparameter (Kp, $K_V$, $K_I$) eines Proportional-, eines Differenzier- und eines Integralreglergliedes abgestimmt werden und dabei erst die Reglerparameter ($K_P$, $K_V$) des Differenzier- (144) und des Proportionalreglergliedes (140;148) und anschließend der Reglerparameter ($K_I$) des Integralreglergliedes (160) des Reglers (4) abgestimmt werden.

3. Verfahren nach Anspruch 1 oder 2, **dadurch gekennzeichnet, daß** die Reglerparameter ($K_P$, $K_V$) des Proportional-(140;148) und des Differenzierreglergliedes (144) des Reglers (4)

   - erst mittels einer ersten Regelbasis (22) ohne Berücksichtigung der technischen Grenzen der Regelstrecke (6), insbesondere eines Treibers, abgestimmt werden und
   - anschließend mittels einer zweiten Regelbasis (26) an diese technischen Grenzen angepaßt werden.

4. Verfahren nach einem der vorstehenden Ansprüche, **dadurch gekennzeichnet, daß** physikalische Größen ($x_{max}$, $T_1$, $T_S$, $T_{1\ fertig}$, $I_{max\ Bremsen}$, $dI/dt_{max\ Bremsen}$, $T_{S1}$, $T_{S2}$, $x_{max1}$, $x_{max2}$) aus der Regel- und/oder der Stellgröße als Eingangsgrößen für die Fuzzy-Abstimmungseinheit (8) abgeleitet werden.

5. Verfahren nach Anspruch 4, **dadurch gekennzeichnet, daß** aus der Regelgröße des Reglers (4):

   - eine erste Zeit ($T_1$) bis zum Erreichen eines Extremwerts ($x_{max}$; h1), insbesondere des ersten Maximums, der Regelgröße,
   - ein erster Überschwingwert, der mit dem Wert dieses Extremwerts ($x_{max}$; h1) und/oder wenigstens einem nachfolgenden Extremwert (h2) der Regelgröße korreliert ist,
   - eine zweite Zeit ($T_S$) bis zum Verbleib der Regelgröße innerhalb vorgegebener, insbesondere an den Führungsgrößenverlauf gekoppelter Schranken ($\varepsilon$), und/oder
   - ein Wert zur Angabe, ob ein Überschwingen der Re-Regelgröße über die Führungsgröße stattgefunden hat;

   sowie aus der Stellgröße des Reglers (4):

- ein Wert für das Rauschen der Stellgröße,
- eine maximale zeitliche Änderung ($dI/dt_{max\ Bremsen}$) der Stellgröße, und/oder
- ein Extremwert ($I_{max\ Bremsen}$) der Stellgröße

als Eingangsgrößen der Fuzzy-Abstimmungseinheit (8), insbesondere zum Abstimmen der Reglerparameter ($K_P$, $K_V$) des Proportional- (140;148) und des Differenzierreglergliedes (144), abgeleitet werden.

6. Verfahren nach Anspruch 5, **dadurch gekennzeichnet, daß** beim Abstimmen solange verschiedene Führungsgrößenverläufe nacheinander verwendet werden, bis bei einem bestimmten Führungsgrößenverlauf - nachfolgend maximaler Führungsgrößenverlauf genannt - eines der folgenden Kriterien erfüllt ist: die technischen Grenzen der Regelstrecke (6) werden überschritten oder das Regelverhalten des Regelsystems entspricht den gewünschten Vorgaben.

7. Verfahren nach Anspruch 6, **dadurch gekennzeichnet, daß** zwei Führungsgrößenverläufe derart stufenförmig für den Abstimmvorgang ausgewählt werden, daß die erste Stufe zu einem bestimmten hohen Anteil und die zweite Stufe zu einem bestimmten niedrigen Anteil die Kriterien für den maximalen Führungsgrößenverlauf erfüllt.

8. Verfahren nach einem der Ansprüche 5 bis 7, **dadurch gekennzeichnet, daß** die Reglerparameter ($K_P$, $K_V$) derart abgestimmt werden, daß der maximale Wert ($I_{max\ Bremsen}$) und die maximale zeitliche Änderung ($dI/dt_{max\ Bremsen}$) der Stellgröße jeweils ihren vorgegebenen Maximalwert nicht überschreiten, der Wert ein Überschwingen der Regelgröße über die Führungsgröße angibt und/oder die erste Zeit ($T_1$) bis zum Erreichen des Extremwerts der Regelgröße, der erste Überschwingwert, die zweite Zeit ($T_S$) bis zum Verbleib der Regelgröße innerhalb vorgegebener Schranken ($\varepsilon$) sowie der Wert für das Rauschen der Stellgröße minimal werden.

9. Verfahren nach einem der Ansprüche 5 bis 8, **dadurch gekennzeichnet, daß** der Überschwingwert aus dem ersten Maximum (h1) und dem ersten Minimum (h2) der Regelgröße abgeleitet wird, insbesondere nach folgender Formel:

Überschwingwert = 1 + (normierte Höhe des ersten

Maximums (h1) - normierte Höhe des

ersten Minimums (h2) )/2.

10. Verfahren nach Anspruch 2, **dadurch gekennzeichnet, daß** beim Abstimmen des Reglerparameters ($K_I$) des Integralreglergliedes (160) ein zweistufiger Führungsgrößenverlauf, insbesondere ein zweistufiger Lageverlauf für einen Antrieb (33), gewählt wird.

11. Verfahren nach Anspruch 10, **dadurch gekennzeichnet, daß** aus der Regelgröße des Reglers (4):

- eine dritte Zeit ($T_{S1}$) bis zum Verbleib der Regelgröße innerhalb vorgegebener, an die erste Stufe des Führungsgrößenverlaufes gekoppelter Schranken ($\varepsilon$),
- eine vierte Zeit ($T_{S2}$) bis zum Verbleib der Regelgröße innerhalb vorgegebener, an die zweite Stufe des Führungsgrößenverlaufes gekoppelter Schranken ($\varepsilon$),
- ein zweiter Überschwingwert, der mit dem Wert des ersten Extremwerts ($x_{max1}$) und/oder nachfolgender Extremwerte der Regelgröße während der ersten Stufe des Führungsgrößenverlaufes korreliert ist und
- ein dritter Überschwingwert, der mit dem Wert des ersten Extremwerts ($x_{max2}$) und/oder nachfolgender Extremwerte der Regelgröße während der zweiten Stufe des Führungsgrößenverlaufes korreliert ist,

als Eingangsgrößen der Fuzzy-Abstimmungseinheit (8), insbesondere zum Abstimmen des Reglerparameters ($K_I$) des Integralreglergliedes (160), abgeleitet werden.

12. Verfahren nach Anspruch 11, **dadurch gekennzeichnet, daß** der Reglerparameter ($K_I$) des Integralreglers (160) derart abgestimmt wird, daß die dritte Zeit ($T_{S1}$) und die vierte ($T_{S2}$) Zeit im wesentlichen gleich lang werden und/oder der zweite ($x_{max1}$) und der dritte Überschwingwert ($x_{max2}$) minimal werden.

13. Verfahren nach einem der vorstehenden Ansprüche, **dadurch gekennzeichnet, daß** der Abstimmvorgang der jeweiligen Reglerparameter ($K_P$, $K_V$, $K_I$) beendet wird, falls die Änderungen der Reglerparameter ($K_P$, $K_V$, $K_I$) in aufeinanderfolgenden Regelschritten der Fuzzy-Abstimmungseinheit (8) innerhalb vorgegebener Schranken liegen und/oder die Anzahlen an Regelschritten bestimmte Werte überschreiten.

14. Verfahren nach einem der vorstehenden Ansprüche, **dadurch gekennzeichnet, daß** die abzustimmenden Reglerparameter ($K_P$, $K_V$, $K_I$) zu Beginn des Abstimmvorganges auf Werte gesetzt werden, derart, daß die Regelstrekke (6) auf bestimmte äußere Einflüsse reagieren kann, insbesondere daß der Antrieb (33) in der Regelstrecke (6) die auf ihn wirkenden Kräfte kompensieren kann.

15. Verfahren nach Anspruch 14, **dadurch gekennzeichnet, daß** die Reglerparameter ($K_P$, $K_V$, $K_I$) auf die og. Werte zurückgesetzt werden, wenn beim Abstimmen die erfaßte Regelgröße zu stark oszilliert.

16. Verfahren nach einem der vorstehenden Ansprüche, **dadurch gekennzeichnet, daß** der Regelkreis des Reglers (4) während des Abstimmvorganges nicht geöffnet wird.

17. Verfahren nach einem der vorstehenden Ansprüche, **dadurch gekennzeichnet, daß** als Regelgröße des Reglers (4) die Lage eines in der Regelstrecke (6) enthaltenen Antriebes (33) und/oder die Lage der vom Antrieb angetriebenen mechanischen Einheit (34, 36), insbesondere einer von einer Spindel (36) geführten Einheit, dem Regler (4) zugeführt wird.

18. Verfahren nach einem der vorhergehenden Ansprüche, bei welchem die Regelstrecke (6), insbesondere ein Antrieb (33) in einer Elektroerosionsvorrichtung, mittels des Reglers (4) mit wenigstens dem Proportional- (140, 148), Differenzier- (144) und/oder Integralreglerglied (160) geregelt wird.

19. Verfahren nach Anspruch 18, **dadurch gekennzeichnet, daß** die dem Regler (4) zugeführte Führungsgröße n-fach überabgetastet wird.

20. Verfahren nach Anspruch 18 oder 19, **dadurch gekennzeichnet, daß** dem Integralreglerglied (160) die Ausgangsgröße(n) des Proportional- (148) und/oder des Differenzierreglergliedes (144), ggf. weiterer Proportional- (140) und/oder Differenzierreglerglieder zugeführt und bei der Integration berücksichtigt wird/werden.

21. Verfahren nach einem der Ansprüche 18 bis 20, **dadurch gekennzeichnet, daß** lediglich einer Auswahl von Reglergliedern (140, 144) die n-fach überabgetastete Führungsgröße und insbesondere den weiteren Proportional-(148) und/oder Differenziergliedern die nicht-überabgetastete Führungsgröße zugeführt wird.

22. Verfahren nach einem der Ansprüche 18 bis 21, **dadurch gekennzeichnet, daß** die Stellgröße zum Vermeiden einer Übersteuerung der Regelstrecke (6) überwacht wird.

23. Verfahren nach Anspruch 22, **dadurch gekennzeichnet, daß** der Betrag der Stellgröße des Reglers (4) mit einem vorgegebenen Extremwert ($I_{max}$, $dI/dt_{max}$) für die Regelstrecke (6) verglichen wird und im Falle des Überschreitens der Beitrag ($I_{Ausgabe, i}$) des Integralreglergliedes (160) von der Stellgröße abgezogen und/oder die letzte Akkumulation des Integralreglergliedes (160) rückgängig gemacht wird.

24. Verfahren nach einem der Ansprüche 18 bis 23, **dadurch gekennzeichnet, daß** die dem Eingang des Reglers (4) zugeführte Regelgröße und/oder Führungsgröße korrigiert wird.

25. Verfahren nach Anspruch 24, **dadurch gekennzeichnet, daß** die Regelgröße und/oder die Führungsgröße mittels abgespeicherter Korrekturdaten korrigiert wird, welche die mechanischen Ungenauigkeiten der Regelstrecke (6) berücksichtigen.

26. Verfahren nach einem der Ansprüche 18 bis 25, **dadurch gekennzeichnet, daß** die Genauigkeit der von einem dem Regler (4) nachgeschalteten D/A-Wandler gewandelten Stellgröße im zeitlichen Mittel erhöht wird.

27. Verfahren nach Anspruch 26, **dadurch gekennzeichnet, daß** die Genauigkeit der Stellgröße erhöht wird, indem einer Folge von Abtastwerten der Stellgröße eine Werte-Folge mit höherer Rate als die Abtastrate aufaddiert und die so erhaltene Folge dem nachgeschalteten D/A-Wandler zugeführt wird, wobei die Werte-Folge derart ausgewählt wird, daß die Ausgangsfolge des D/A-Wandlers im zeitlichen Mittel der Folge der Abtastwerte der Stellgröße angenähert ist.

**28.** Verfahren nach einem der Ansprüche 18 bis 27, **dadurch gekennzeichnet, daß** der Reglerparamters ($K_V$) des Geschwindigkeitsreglergliedes (144) für die Zeitdauer, für welche die Regelgröße im wesentlichen konstant ist, temporär vermindert wird.

**29.** Verfahren nach einem der Ansprüche 18 bis 28, **dadurch gekennzeichnet, daß** die der internen Berechnung des Reglers (4) zugrundeliegenden Fließkommazahlen derart in die, insbesondere dem D/A-Wandler zugeführten, Integerzahlen umgewandelt werden, daß die jeweils einer Integerzahl zugeordneten Fließkommazahl-Intervalle gleichgroß sind.

**30.** Verfahren nach einem der Ansprüche 18 bis 29, **dadurch gekennzeichnet, daß** als Regelgröße die Lage eines in der Regelstrecke (6) enthaltenen Antriebes (33) und/oder die Lage der vom Antrieb angetriebenen mechanischen Einheit, insbesondere einer Spindel (36), dem Regler (4) zugeführt wird.

**31.** Fuzzy-Abstimmungseinheit (8) zum Abstimmen wenigstens eines Reglerparameters ($K_P$, $K_V$, $K_I$) eines Reglers (4), der wenigstens ein Proportional- (140, 148), Differenzier- (144) und/oder Integralreglerglied (160) aufweist und eine Regelstrecke (6) regelt, mit:

- einem Führungsgrößenverlaufgeber (18), welcher mit dem Eingang des Reglers (4) gekoppelt ist, zum Bereitstellen eines bestimmten Führungsgrößenverlaufs als Eingangsgröße für den Regler (4),
- ersten Mitteln (24), welche mit dem Ausgang der Regelstrecke (6) gekoppelt sind, zum Ableiten von Größen aus der Regelgröße des Reglers (4),
- zweiten Mitteln (28), welche mit dem Ausgang des Reglers (4) gekoppelt sind, zum Ableiten von Größen aus der Stellgröße des Reglers (4), und
- dritten Mitteln (16), welche mit dem Regler (4) für die Übergabe der Reglerparameter ($K_P$, $K_V$, $K_I$) gekoppelt sind,

**dadurch gekennzeichnet, daß**

- die Fuzzy-Abstimmungseinheit (8) wenigstens eine Regelbasis (22, 26) implementiert hat, mit der der wenigstens eine Reglerparameter ($K_P$, $K_V$, $K_I$) derart abgestimmt wird, daß während des zugeführten Führungsgrößenverlaufs außerhalb einer etwaigen Phase der Übersteuerung der Regelstrecke (6) diese unter Berücksichtigung ihrer technischen Grenzen immer im linearen Bereich durchfahren wird.

**32.** Fuzzy-Abstimmungseinheit nach Anspruch 31, **dadurch gekennzeichnet, daß** für einen in der Regelstrecke (6) enthaltenen Antrieb (33) Mittel (38) zur Lageerfassung des Antriebes (33) und/oder Mittel zur Lageerfassung der vom Antrieb (33) angetriebenen mechanischen Einheit und zum Bereitstellen der Regelgröße vorgesehen sind.

**33.** Fuzzy-Abstimmungseinheit nach Anspruch 31 oder 32 mit wenigstens dem Proportional- (140, 148), Differenzier-(144) und/oder Integralreglerglied (160) für die Regelstrecke (6).

**34.** Fuzzy-Abstimmungseinheit nach Anspruch 33, **gekennzeichnet durch** eine Oversamplingeinrichtung (130) zum Erzielen eines n-fachen Oversampling der dem Regler (4) zugeführten Führungsgröße.

**35.** Fuzzy-Abstimmungseinheit nach Anspruch 33 oder 34, **dadurch gekennzeichnet, daß** das Proportional- (148) und/oder das Differenzierreglerglied (144) und ggf. weitere Proportional- (140) und/oder Differenzierreglerglieder dem Integralreglerglied (160) derart vorgeschaltet sind, daß die Akkumulation des Integralreglergliedes (160) auf der Basis der Ausgangsgrößen des bzw. der vorgenannten Reglerglieder (140, 144, 148) erfolgt.

**36.** Fuzzy-Abstimmungseinheit nach Anspruch 35, **dadurch gekennzeichnet, daß** die Oversamplingeinrichtung (130) lediglich einer Auswahl von Reglergliedern (140, 144), insbesondere nicht den weiteren Proportional- (148) und/ oder Differenziergliedern, vorgeschaltet ist.

**37.** Fuzzy-Abstimmungseinheit nach einem der Ansprüche 33 bis 36, **gekennzeichnet durch** eine AntiÜbersättigungseinrichtung (176) für das Integralreglerglied (160) zum Vermeiden einer Übersteuerung der Regelstrecke (6).

**38.** Fuzzy-Abstimmungseinheit nach Anspruch 37, **dadurch gekennzeichnet, daß** die Anti-Übersättigungseinrichtung (176) derart ausgelegt ist, daß sie den Betrag der Stellgröße des Reglers (4) mit einem vorgegebenen Maximalwert für die Regelstrecke (6) vergleicht und im Falle des Überschreitens den Beitrag des Integralreglergliedes (160) von der Stellgröße abzieht und/oder die letzte Akkumulation des Integralreglergliedes (160) rückgängig macht.

**39.** Fuzzy-Abstimmungseinheit nach einem der Ansprüche 33 bis 38, **gekennzeichnet durch** eine Korrektureinrichtung (150) zum Korrigieren der dem Eingang des Reglers (4) zugeführten Regelgröße und/oder der Führungsgröße.

**40.** Fuzzy-Abstimmungseinheit nach Anspruch 39, **dadurch gekennzeichnet, daß** die Korrektureinrichtung (150) ein Speichermittel (156) zum Speichern von Korrekturdaten umfaßt, welche die mechanischen Ungenauigkeiten der Regelstrecke (6) berücksichtigen.

**41.** Fuzzy-Abstimmungseinheit nach einem der Ansprüche 33 bis 40, **gekennzeichnet durch** Mittel (196) zum Erhöhen der Genauigkeit der von einem dem Regler (6) nachgeschalteten D/A-Wandler gewandelten Stellgröße.

**42.** Fuzzy-Abstimmungseinheit nach Anspruch 41, **dadurch gekennzeichnet, daß** die Mittel (196) derart ausgelegt sind, daß sie einer Folge von Abtastwerten der Stellgröße eine Werte-Folge mit höherer Rate als die Abtastrate aufaddieren und die so erhaltene Folge dem nachgeschalteten D/A-Wandler zuführen, wobei sie die Werte-Folge derart auswählen, daß die Ausgangsfolge des D/A-Wandlers im zeitlichen Mittel der Folge der Abtastwerte der Stellgröße angenähert ist.

**43.** Fuzzy-Abstimmungseinheit nach einem der Ansprüche 33 bis 42, **gekennzeichnet durch** Mittel (196), die derart ausgelegt sind, daß sie den Reglerparamter ($K_V$) des Differenzierreglergliedes (144) für die Zeitdauer, für welche die Regelgröße im wesentlichen konstant ist, temporär vermindern.

**Claims**

**1.** Method for inferring at least one controller parameter ($K_P$, $K_V$, $K_I$) of a controller (4), which has at least one proportional (140; 148), differential (144) and/or integral controller element (160) and which controls a control path (6) by means of a fuzzy inference unit (8), to which both the controlled variable and the manipulated variable of the controller (4) are fed as its input variables for the inference of the controller parameters ($K_P$, $K_V$, $K_I$) and which outputs the controller parameters ($K_P$, $K_V$, $K_I$) to be inferred as its output variables, in which a defined reference variable characteristic is fed to the controller (4) as an input variable for the inference process, **characterised in that** the at least one controller parameter ($K_P$, $K_V$, $K_I$) is inferred by means of at least one control basis (22, 26) set up in the fuzzy inference unit (8) in such a way that, while the reference variable characteristic fed to it is varying, except during a possible phase of over-driving of the control path (6), this is always processed in the linear range taking into account its technical limits.

**2.** Method according to Claim 1, **characterised in that** the controller parameters ($K_P$, $K_V$, $K_I$) of a proportional, a differential and an integral controller element are inferred and, in so doing, first the controller parameters ($K_P$, $K_V$) of the differential controller element (144) and of the proportional controller element (140; 148) and subsequently the controller parameter ($K_I$) of the integral controller element (160) of the controller (4) are inferred.

**3.** Method according to Claim 1 or 2, **characterised in that** the controller parameters ($K_P$, $K_V$) of the proportional controller element (140; 148) and of the differential controller element (144) of the controller (4)

- are first inferred by means of a first control basis (22) without taking into account the technical limits of the control path (6), in particular of a driver, and
- subsequently adapted to these technical limits by means of a second control basis (26).

**4.** Method according to one of the preceding claims, **characterised in that** physical variables ($x_{max}$, $T_1$, $T_s$, $T_{1\,final}$, $I_{max\,braking}$, $dI/dt_{max\,braking}$, $T_{S1}$, $T_{S2}$, $x_{max1}$, $x_{max2}$) are derived from the controlled variable and/or from the manipulated variable as input variables for the fuzzy inference unit (8).

**5.** Method according to Claim 4, **characterised in that**

- a first time ($T_1$) until reaching an extreme value ($x_{max}$; h1) of the controlled variable, in particular of the first maximum,

- a first overshoot value, which is correlated with the value of this extreme value ($x_{max}$; h1) and/or at least one subsequent extreme value (h2) of the controlled variable,
- a second time ($T_S$) until the controlled value remains within defined limits ($\varepsilon$), in particular connected with the characteristic of the reference variable, and/or
- a value to show whether an overshoot of the controlled variable above the reference variable has occurred,

are derived from the controlled variable of the controller (4) and

- a value for the noise level of the manipulated variable,
- a maximum change with respect to time ($dI/dt_{max\ braking}$) of the manipulated variable, and/or
- an extreme value ($I_{max\ braking}$) of the manipulated variable

are derived from the manipulated variable of the controller (4) as input variables to the fuzzy inference unit (8), in particular for inferring the controller parameters ($K_P$, $K_V$) of the proportional controller element (140; 148) and of the differential controller element (144).

6. Method according to Claim 5, **characterised in that**, while inferring, different reference variable characteristics are used one after the other until, for a particular reference variable characteristic - hereinafter referred to as the maximum reference variable characteristic - one of the following criteria is fulfilled: the technical limits of the control path (6) are exceeded or the control behaviour of the control system corresponds to the desired requirements.

7. Method according to Claim 6, **characterised in that** two reference variable characteristics are selected for the inference process in stages in such a way that the first stage fulfils the criteria for the maximum reference variable characteristic to a particular high extent and the second stage fulfils them to a particular low extent.

8. Method according to one of Claims 5 to 7, **characterised in that** the controller parameters ($K_P$, $K_V$) are inferred in such a way that the maximum value ($I_{max\ brak-\ ing}$) and the maximum change with respect to time ($dI/dt_{max\ braking}$) of the manipulated variable do not exceed their respective defined maximum value, the value shows an overshooting of the controlled variable above the reference variable and/or the first time ($T_1$) until reaching the extreme value of the controlled variable, the first overshoot value, the second time ($T_S$) until the controlled value remains within defined limits ($\varepsilon$) and the value for the noise level of the manipulated variable are minimised.

9. Method according to one of Claims 5 to 8, **characterised in that** the overshoot value is derived from the first maximum (h1) and the first minimum (h2) of the controlled variable, in particular according to the following formula:

overshoot value = 1 + (normalised height of the first

maximum (h1) - normalised height of

the first minimum (h2) )/2.

10. Method according to Claim 2, **characterised in that** when inferring the controller parameter ($K_I$) of the integral controller element (160), a two-stage reference variable characteristic, in particular a two-stage position characteristic for a drive (33), is chosen.

11. Method according to Claim 10, **characterised in that**

- a third time ($T_{S1}$) until the controlled variable remains within defined limits ($\varepsilon$) connected with the first stage of the reference variable characteristic,
- a fourth time ($T_{S2}$) until the controlled variable remains within defined limits ($\varepsilon$) connected with the second stage of the reference variable characteristic,
- a second overshoot value, which is correlated with the value of the first extreme value ($x_{max1}$) and/or subsequent extreme values of the controlled variable during the first stage of the reference variable characteristic, and
- a third overshoot value, which is correlated with the value of the first extreme value ($x_{max2}$) and/or subsequent extreme values of the controlled variable during the second stage of the reference variable characteristic

are derived from the controlled variable of the controller (4) as input variables to the fuzzy inference unit (8), in particular for inferring the controller parameter ($K_I$) of the integral controller element (160).

12. Method according to Claim 11, **characterised in that** the controller parameter ($K_I$) of the integral controller (160) is inferred in such a way that the third time ($T_{S1}$) and the fourth time ($T_{S2}$) become essentially the same length and/or the second ($X_{max1}$) and the third overshoot value ($x_{max2}$) are minimised.

13. Method according to one of the preceding claims, **characterised in that** the inference process for the respective controller parameters ($K_P$, $K_V$, $K_I$) is terminated when the changes in the controller parameters ($K_P$, $K_V$, $K_I$) in consecutive control steps of the fuzzy inference unit (8) lie within defined limits and/or the numbers of control steps exceed certain values.

14. Method according to one of the preceding claims, **characterised in that**, at the start of the inference process, the controller parameters ($K_P$, $K_V$, $K_I$) to be inferred are set to such values that the control path (6) is able to respond to certain external influences, in particular that the drive (33) in the control path (6) is able to compensate for the forces acting upon it.

15. Method according to Claim 14, **characterised in that** the controller parameters ($K_P$, $K_V$, $K_I$) are reset to the above-mentioned values if the measured control variable oscillates too violently during the inference.

16. Method according to one of the preceding claims, **characterised in that** the control path of the controller (4) is not opened during the inference process.

17. Method according to one of the preceding claims, **characterised in that** the position of a drive (33) contained within the control path (6) and/or the position of the mechanical unit (34, 36) driven by the drive, in particular of a unit driven by a spindle (36), is fed to the controller (4) as the controlled variable of the controller (4).

18. Method according to one of the preceding claims, in which the control path (6), in particular a drive (33) in an electrical erosion device, is controlled by the controller (4) with at least the proportional (140, 148), differential (144) and/or integral controller element (160).

19. Method according to Claim 18, **characterised in that** the reference variable fed to the controller (4) is n-times over-sampled.

20. Method according to Claim 18 or 19, **characterised in that** the output variable(s) of the proportional controller element (148) and/or of the differential controller element (144) and possibly of further proportional (140) and/or differential controller elements is/are fed to the integral controller element (160) and taken into account in the integration.

21. Method according to one of Claims 18 to 20, **characterised in that** the n-times over-sampled reference variable is only fed to a selection of controller elements (140, 144) and in particular that the not over-sampled reference variable is fed to the further proportional (148) and/or differential elements.

22. Method according to one of Claims 18 to 21, **characterised in that** the manipulated variable is monitored to avoid over-driving the control path (6).

23. Method according to Claim 22, **characterised in that** the magnitude of the manipulated variable of the controller (4) is compared with a defined extreme value ($I_{max}$, $dI/dt_{max}$) for the control path (6) and, if the contribution ($I_{output,\,i}$) of the integral controller element (160) exceeds it, is subtracted from the manipulated variable and/or the last accumulation of the integral controller element (160) is cancelled.

24. Method according to one of Claims 18 to 23, **characterised in that** the controlled variable and/or the reference variable fed to the input of the controller (4) is corrected.

25. Method according to Claim 24, **characterised in that** the controlled variable and/or the reference variable is corrected by means of stored correction data, which take into account the mechanical inaccuracies of the control path (6).

**26.** Method according to one of Claims 18 to 25, **characterised in that** the accuracy, averaged over time, of the manipulated variable derived from a D/A converter connected after the controller (4) is increased.

**27.** Method according to Claim 26, **characterised in that** the accuracy of the manipulated variable is increased by adding a sequence of values with a higher rate than the sample rate to a sequence of sampled values of the manipulated variable and feeding the sequence so obtained to the subsequently connected D/A converter, the sequence of values being chosen in such a way that the output sequence of the D/A converter averaged over time approximates to the sequence of the sampled values of the manipulated variable.

**28.** Method according to one of Claims 18 to 27, **characterised in that** the controller parameter ($K_V$) of the speed controller element (144) is temporarily reduced for the period of time for which the controlled variable is essentially constant.

**29.** Method according to one of Claims 18 to 28, **characterised in that** the floating point numbers used as a basis for the internal calculation of the controller (4) are converted to the integer numbers, which in particular are fed to the D/A converter, in such a way that the floating point number intervals assigned to each integer number are of equal magnitude.

**30.** Method according to one of Claims 18 to 29, **characterised in that** the position of a drive (33) contained within the control path (6) and/or the position of the mechanical unit driven by the drive, in particular of a spindle (36), is fed to the controller (4) as the controlled variable.

**31.** Fuzzy inference unit (8) for inferring at least one controller parameter ($K_P$, $K_V$, $K_I$) of a controller (4), which has at least one proportional (140, 148), differential (144) and/or integral controller element (160) and which controls a control path (6), with:

- a reference variable characteristic generator (18), which is connected to the input of the controller (4), to make available a particular reference variable characteristic as an input variable for the controller (4),
- first means (24), which are connected to the output of the control path (6), for the derivation of variables from the controlled value of the controller (4),
- second means (28), which are connected to the output of the controller (4), for the derivation of variables from the manipulated value of the controller (4), and
- third means (16), which are connected to the controller (4) for transferring the controller parameters ($K_P$, $K_V$, $K_I$),

**characterised in that**

- the fuzzy inference unit (8) has implemented at least one control basis (22, 26), with which the at least one controller parameter ($K_P$, $K_V$, $K_I$) is inferred in such a way that, while the reference variable characteristic fed to it is varying, except during a possible phase of over-driving of the control path (6), this is always processed in the linear range taking into account its technical limits.

**32.** Fuzzy inference unit according to Claim 31, **characterised in that**, for a drive (33) contained within the control path (6), means (38) for detecting the position of the drive (33) and/or means for detecting the position of the mechanical unit driven by the drive (33) and for making available the controlled variable are provided.

**33.** Fuzzy inference unit according to Claim 31 or 32 with at least the proportional (140, 148), differential (144) and/ or integral controller element (160) for the control path (6).

**34.** Fuzzy inference unit according to Claim 33, **characterised by** an over-sampling device (130) to produce an n-times over-sampling of the reference variable fed to the controller (4).

**35.** Fuzzy inference unit according to Claim 33 or 34, **characterised in that** the proportional controller element (148) and/or the differential controller element (144) and possibly further proportional (140) and/or differential controller elements are connected prior to the integral controller element (160) in such a way that the accumulation of the integral controller element (160) is carried out on the basis of the output variables of the aforementioned controller element or elements (140, 144, 148).

**36.** Fuzzy inference unit according to Claim 35, **characterised in that** the over-sampling device (130) is only connected prior to a selection of controller elements (140, 144), in particular not prior to the further proportional (148) and/or differential elements.

37. Fuzzy inference unit according to one of Claims 33 to 36, **characterised by** an anti-oversaturation device (176) for the integral controller element (160) to prevent the control path (6) from being over-driven.

38. Fuzzy inference unit according to Claim 37, **characterised in that** the anti-oversaturation unit (176) is designed in such a way that it compares the magnitude of the manipulated variable of the controller (4) with a defined maximum value for the control path (6) and, if it exceeds it, subtracts the contribution of the integral controller element (160) from the manipulated variable and/or cancels the last accumulation of the integral controller element (160).

39. Fuzzy inference unit according to one of Claims 33 to 38, **characterised by** a correction unit (150) for correcting the controlled variable fed to the input of the controller (4) and/or the reference variable.

40. Fuzzy inference unit according to Claim 39, **characterised in that** the correction unit (150) incorporates a storage means (156) for storing correction data, which take into account the mechanical inaccuracies of the control path (6).

41. Fuzzy inference unit according to one of Claims 33 to 40, **characterised by** means (196) for increasing the accuracy of the manipulated variable converted by a D/A converter connected after the controller (6).

42. Fuzzy inference unit according to Claim 41, **characterised in that** the means (196) are designed in such a way that they add a sequence of values with a higher rate than the sample rate to a sequence of sampled values of the manipulated variable and feed the sequence so obtained to the subsequently connected D/A converter, choosing the sequence of values in such a way that the output sequence of the D/A converter averaged over time approximates to the sequence of the sampled values of the manipulated variable.

43. Fuzzy inference unit according to one of Claims 33 to 42, **characterised by** means (196) that are designed in such a way that they temporarily reduce the controller parameter ($K_V$) of the differential controller element (144) for the period of time for which the controlled variable is essentially constant.

**Revendications**

1. Procédé pour accorder au moins un paramètre ($K_P$, $K_V$, $K_I$) d'un régulateur (4), qui comporte au moins un organe de régulation à action proportionnelle (140 ; 148), à action différentielle (144) et/ou à action intégrale (160) et règle une section à régler (6), au moyen d'une unité d'accord à logique floue (8), à laquelle aussi bien la longueur de réglage réglée que la grandeur de réglage du régulateur (4) sont envoyées en tant que grandeurs d'entrée de cette unité pour le réglage d'accord des paramètres ($K_P$, $K_V$, $K_I$) du régulateur, et qui délivre des paramètres à régler ($K_P$, $K_V$, $K_I$) du régulateur, en tant que grandeurs de sortie de cette unité, selon lequel une variation prédéterminée de grandeur pilote est envoyée en tant que grandeur d'entrée au régulateur (4) pour le processus de réglage d'accord, **caractérisé en ce que** le au moins un paramètre ($K_P$, $K_V$, $K_I$) du régulateur est accordé à l'aide d'au moins une base de régulation (22, 26) établie dans l'unité de réglage d'accord à logique floue (8) de telle sorte que pendant la variation envoyée de grandeur pilote, à l'extérieur d'une éventuelle phase de surmodulation de la section à régler (6), cette dernière est toujours parcourue dans une gamme linéaire en tenant compte de ses limites techniques.

2. Procédé selon la revendication 1, **caractérisé en ce que** les paramètres ($K_P$, $K_V$, $K_I$) d'un organe de régulation à action proportionnelle, d'un organe de régulation à action différentielle et d'un organe de régulation à action intégrale sont accordés et seuls les paramètres ($K_P$, $K_V$) de l'organe de régulation à action différentielle (144) et de l'organe de régulation à action proportionnelle (140 ; 148) d'abord sont accordés, et ensuite le paramètre ($K_I$) de l'organe de régulation à action intégrale (160) du régulateur (4) est accordé.

3. Procédé selon la revendication 1 ou 2, **caractérisé en ce que** les paramètres ($K_P$, $K_V$) de l'organe de régulation à action proportionnelle (140 ; 148) et de l'organe à action différentielle (114) du régulateur (4)

  - sont accordés tout d'abord au moyen d'une première base de régulation (22) sans tenir compte des limites techniques de la section à régler (6), notamment d'un étage d'attaque, et

- ensuite sont adaptés à ces limites techniques au moyen d'une seconde base de régulation (26).

4. Procédé selon l'une des revendications précédentes, **caractérisé en ce que** les grandeurs physiques ($x_{max}$, $T_1$, $T_s$, $T_{1\ terminé}$, $I_{max\ freinage}$, $dI/dt_{max\ freinage}$, $T_{S1}$, $T_{S2}$, $x_{max1}$, $x_{max2}$) sont dérivés de la grandeur réglée et/ou de la grandeur de réglage en tant que grandeurs d'entrée pour l'unité de réglage d'accord à logique floue (8).

5. Procédé selon la revendication 4, **caractérisé en ce qu'**à partir de la grandeur réglée du régulateur (4) sont dérivés :

   - un premier intervalle ($T_1$) jusqu'à ce que soit atteinte une valeur extrême ($x_{max}$ ; h1) notamment le premier maximum, de la grandeur réglée,

   - une première valeur de surréglage, qui est corrélée à la valeur de cette valeur extrême ($x_{max}$ ; h1) et/ou au moins à une valeur extrême suivante (h2) de la grandeur réglée,

   - un second intervalle de temps ($T_s$) jusqu'à ce que la grandeur réglée reste à l'intérieur de limites prédéterminées ($\varepsilon$) couplées à la variation de la grandeur pilote, et/ou

   - une valeur servant à indiquer si une surrégulation de la valeur réglée a été effectuée par l'intermédiaire de la grandeur pilote ;

   et qu'à partir de la grandeur de réglage du régulateur (4) sont dérivées:

   - une valeur du bruit de la grandeur de réglage,

   - une variation maximale dans le temps ($dI/dt_{max\ freinage}$) de la grandeur de réglage, et/ou

   - une valeur extrême ($I_{max\ freinage}$) de la grandeur de réglage

   en tant que grandeurs d'entrée de l'unité de réglage d'accord à logique floue (8), notamment pour la détermination des paramètres ($K_P$, $K_V$) de l'organe de régulation à action proportionnelle (140 ; 148) et de l'organe de réglage à action différentielle (144) du régulateur.

6. Procédé selon la revendication 5, **caractérisé en ce que** lors de réglages d'accord, on utilise successivement des allures différentes de grandeur pilote jusqu'à ce que, pour une variation déterminée de la grandeur pilote - désignée ci-après sous l'expression variation maximale de la grandeur pilote - l'un des critères suivants soit satisfait : les limites techniques de la section de réglage (6) sont dépassées ou le comportement de réglage du système de régulation correspond aux prescriptions désirées.

7. Procédé selon la revendication 6, **caractérisé en ce que** deux variations de la grandeur pilote sont sélectionnées d'une manière étagée pour le processus de réglage d'accord de telle sorte que le premier étage satisfait, avec un pourcentage élevé déterminé, et le second étage satisfait avec un faible pourcentage déterminé, aux critères de la variation maximale de la grandeur pilote.

8. Procédé selon l'une des revendications 5 à 7, **caractérisé en ce que** les paramètres ($K_P$, $K_V$) du régulateur sont accordés de telle sorte que la valeur maximale ($I_{max\ freinage}$) et la variation maximale dans le temps ($dI/dt_{max\ freinage}$) de la grandeur de réglage ne dépassent respectivement pas leur valeur maximale prédéterminée, que la valeur indique un surréglage de la grandeur réglée au-dessus de la grandeur pilote et/ou que le premier intervalle de temps ($T_1$) jusqu'à ce que soit atteinte la valeur extrême de la grandeur à régler, la première valeur de surréglage, le second intervalle ($T_S$) jusqu'à ce que la grandeur à régler reste à l'intérieur de limites prédéterminées ($\varepsilon$) ainsi que la valeur pour le bruit de la grandeur de réglage deviennent minimum.

9. Procédé selon l'une des revendications 5 à 8, **caractérisé en ce que** la valeur de surréglage est dérivée du premier maximum (h1) et du premier minimum (h2) de la grandeur à régler, notamment conformément à la formule :

$$\text{Valeur de surréglage} = 1 + (\text{hauteur normalisée du premier}$$

maximum (h1) - hauteur normalisée

du premier minimum (h2))/2.

**10.** Procédé selon la revendication 2, **caractérisé en ce que** lors du réglage d'accord du paramètre de ($K_I$) de l'organe de régulation à action intégrale (160) du régulateur, on choisit une variation à deux étages de la grandeur pilote, notamment une position à deux étages pour un dispositif d'entraînement (33).

**11.** Procédé selon la revendication 10, **caractérisé en ce qu'**à partir de la grandeur à régler du régulateur (4) sont déterminés :

- un troisième intervalle de temps ($T_{S1}$) jusqu'à ce que la grandeur à régler subsiste à l'intérieur de limites prédéterminées ($\varepsilon$) lié au premier étage de la variation de la grandeur pilote,

- un troisième intervalle de temps ($T_{S2}$) jusqu'à ce que la grandeur à régler subsiste à l'intérieur de limites prédéterminées ($\varepsilon$) lié au deuxième étage de la variation de la grandeur pilote,

- une seconde valeur de surréglage, qui est corrélée à la valeur de la première valeur extrême ($X_{max1}$) et/ou de valeurs extrêmes suivantes de la grandeur à régler pendant le premier étage de la variation de la grandeur pilote, et

- une troisième valeur de surréglage, qui est corrélée à la valeur de la première valeur extrême ($x_{max1}$) et/ou de valeurs extrêmes suivantes de la grandeur à régler pendant le deuxième étage de la variation de la grandeur pilote,

en tant que grandeurs d'entrée de l'unité de réglage d'accord à logique floue (8), notamment pour le réglage d'accord du paramètre ($K_I$) de l'organe de régulation à action intégrale (160) du régulateur.

**12.** Procédé selon la revendication 11, **caractérisé en ce que** le paramètre ($K_I$) de l'organe de réglage intégral (160) du régulateur est accordé de telle sorte que le troisième intervalle de temps ($T_{S1}$) et le quatrième intervalle de temps ($T_{S2}$) sont essentiellement égaux et/ou que la seconde valeur de surréglage ($X_{max1}$) et la troisième valeur de surréglage ($x_{max2}$) deviennent minimales.

**13.** Procédé selon l'une des revendications précédentes, **caractérisé en ce que** l'opération de réglage d'accord des paramètres respectifs ($K_P$, $K_V$, $K_I$) du régulateur est terminée dans le cas où les variations des paramètres ($K_P$, $K_V$, $K_I$) du régulateur sont situées lors de pas successifs de régulation de l'unité de réglage d'accord à logique floue (8) dans des limites prédéterminées et/ou que les nombres des pas de réglage dépassent une valeur déterminée.

**14.** Procédé selon l'une des revendications précédentes, **caractérisé en ce que** les paramètres ($K_P$, $K_V$, $K_I$) devant être accordés du régulateur sont réglés, au début du processus de réglage d'accord, à des valeurs de telle sorte que la section à régler (6) peut réagir à des influences extérieures déterminées, notamment que le dispositif d'entraînement (33) situé dans la section à régler (6) puisse compenser les forces qui agissent sur lui.

**15.** Procédé selon la revendication 14, **caractérisé en ce que** les paramètres ($K_P$, $K_V$, $K_I$) du régulateur sont rétrogradés aux valeurs indiquées ci-dessus lorsque, lors du réglage d'accord, la grandeur à régler détectée oscille trop fortement.

**16.** Procédé selon l'une des revendications précédentes, **caractérisé en ce que** le circuit de régulation du régulateur (4) n'est pas ouvert pendant le processus de réglage d'accord.

**17.** Procédé selon l'une des revendications précédentes, **caractérisé en ce que** la position d'un dispositif d'entraînement (33) contenu dans la section à régler (6) et/ou la position de l'unité mécanique (34, 36) entraînée par le dispositif d'entraînement, notamment d'une unité guidée par une broche (36), est envoyée en tant que grandeur à régler du régulateur (4).

**18.** Procédé selon l'une des revendications précédentes, selon lequel la section à régler (6), notamment un dispositif d'entraînement (30) dans un dispositif d'électroérosion, est réglée au moyen du régulateur (4) comportant au moins l'organe de réglage à action proportionnelle (140 ; 148), l'organe de réglage à action différentielle (144) et/ou l'organe de réglage à action intégrale (160).

19. Procédé selon la revendication 18, **caractérisé en ce que** la grandeur pilote envoyée au régulateur (4) est suréchantillonnée n fois.

20. Procédé selon la revendication 18 ou 19, **caractérisé en ce que** la ou les grandeurs de sortie de l'organe de réglage à action proportionnelle (148) et/ou de l'organe de réglage à action différentielle (144), éventuellement d'autres organes de réglage à action proportionnelle (140) et/ou à action différentielle et/sont envoyée(s) à l'organe de réglage à action intégrale (160) et est/sont prise(s) en compte lors de l'intégration.

21. Procédé selon l'une des revendications 18 à 20, **caractérisé en ce que** la grandeur pilote suréchantillonnée n fois est soumise uniquement à une sélection d'organes de réglage (140, 144) et que notamment la grandeur pilote non suréchantillonnée est envoyée aux autres organes de réglage à action proportionnelle (148) et/ou à action différentielle.

22. Procédé selon l'une des revendications 18 à 21, **caractérisé en ce que** la grandeur de réglage est contrôlée afin d'éviter une surmodulation de la section à régler (6).

23. Procédé selon la revendication 22, **caractérisé en ce que** la valeur absolue de la grandeur de réglage du régulateur (4) est comparée à une valeur extrême prédéterminée ($I_{max}$, $dI/dt_{max}$) pour la section à régler (6) et que dans le cas du dépassement, la valeur absolue ($I_{sortie, i}$) de l'organe de réglage à action intégrale (160) est réduite de la grandeur de réglage et/ou que la dernière accumulation de l'organe de réglage à action intégrale (160) est annulée.

24. Procédé selon l'une des revendications 18 à 23, **caractérisé en ce que** la grandeur à régler et/ou la grandeur pilote envoyée à l'entrée du régulateur (4) est corrigée.

25. Procédé selon la revendication 24, **caractérisé en ce que** la grandeur à régler et/ou la grandeur pilote sont corrigées au moyen de données de correction mémorisées, qui prennent en compte les imprécisions mécaniques de la section à régler (6).

26. Procédé selon l'une des revendications 18 à 25, **caractérisé en ce que** la précision de la grandeur de réglage, convertie par le convertisseur numérique/analogique branché en aval du régulateur (4), est accrue en moyenne dans le temps.

27. Procédé selon la revendication 26, **caractérisé en ce que** la précision de la grandeur de réglage est accrue par le fait qu'on ajoute à une suite de valeurs d'échantillonnage de la grandeur de réglage une suite de valeurs à une cadence supérieure à la cadence d'échantillonnage et que la suite ainsi obtenue est envoyée au convertisseur numérique/analogique branché en aval, la suite de valeurs étant sélectionnée de telle sorte que la suite de signaux de sortie du convertisseur numérique/analogique se rapproche, en moyenne dans le temps, de la suite de valeurs d'échantillonnage de la grandeur de réglage.

28. Procédé selon l'une des revendications 18 à 27, **caractérisé en ce que** le paramètre ($K_V$) de l'organe de réglage (144) de la vitesse est réduit temporairement pendant l'intervalle de temps, pendant lequel la grandeur à régler est essentiellement constante.

29. Procédé selon l'une des revendications 18 à 28, **caractérisé en ce que** les nombres à virgule flottante, pris comme base pour le calcul interne du régulateur (4), sont convertis en les nombres entiers, envoyés notamment au convertisseur numérique/analogique, de telle sorte que les intervalles des nombres à virgule flottante, associés respectivement à un nombre entier, sont égaux.

30. Procédé selon l'une des revendications 18 à 29, **caractérisé en ce que** la position d'un dispositif d'entraînement (33) contenu dans la section à régler (3) et/ou la position de l'unité mécanique entraînée par le dispositif d'entraînement, notamment une broche (36), est envoyée en tant que grandeur à régler au régulateur (4).

31. Unité de réglage d'accord à logique floue (8) pour réaliser le réglage d'accord d'au moins un paramètre ($K_P$, $K_V$, $K_I$) d'un régulateur (4), qui comporte au moins un organe de réglage à action proportionnelle (140, 148), un organe de réglage à action différentielle (144) et/ou un organe de réglage à action intégrale (160), et règle une section à régler (6), comprenant :

- un générateur (18) de la variation de grandeur pilote, qui est couplé à l'entrée du régulateur (4), pour délivrer une variation déterminée de grandeur pilote en tant que grandeur d'entrée pour le régulateur (4),

- des premiers moyens (24) qui sont couplés à la sortie de la section à régler (6), pour dériver les grandeurs à partir de la grandeur de régulation du régulateur (4),

- des seconds moyens (28), qui sont couplés à la sortie du régulateur (4), pour la dérivation de grandeurs à partir de la grandeur de réglage du régulateur (4), et

- des troisièmes moyens (16), qui sont couplés au régulateur (4) pour le transfert des paramètres ($K_P$, $K_V$, $K_I$) du régulateur,

    **caractérisée en ce que**

l'unité de réglage d'accord à logique floue (8) contient au moins une base de réglage (22, 26) avec laquelle le au moins un paramètre ($K_P$, $K_V$, $K_I$) du régulateur est accordé de telle sorte que pendant la variation envoyée de la grandeur pilote, à l'extérieur d'une éventuelle phase de la surmodulation de la section à régler (6), cette dernière est toujours parcourue dans une gamme linéaire en tenant compte de ses limites techniques.

32. Unité de réglage d'accord à logique floue selon la revendication 31, **caractérisée en ce que** pour un dispositif d'entraînement (33) contenu dans la section de régulation (6), des moyens (38) sont prévus pour détecter la position du dispositif d'entraînement (33) et/ou des moyens pour détecter la position de l'unité mécanique entraînée par le dispositif d'entraînement (33) et pour préparer la grandeur de régulation.

33. Unité de réglage d'accord à logique floue selon la revendication 31 ou 32, comportant au moins l'organe de réglage à action proportionnelle (140, 148), l'organe de réglage à action différentielle (144) et/ou l'organe de réglage à action intégrale (160) pour la section à régler (6).

34. Unité de réglage d'accord à logique floue selon la revendication 33, **caractérisée par** un dispositif de suréchantillonnage (130) pour l'obtention d'un suréchantillonnage n fois de la grandeur pilote envoyée au régulateur (4).

35. Unité de réglage d'accord à logique floue selon la revendication 33 ou 34, **caractérisée en ce que** l'organe de réglage à action proportionnelle (148) et/ou l'organe de réglage à action différentielle (144) et éventuellement d'autres organes de réglage à action proportionnelle (140) et/ou à action différentielle sont branchés en amont de l'organe de réglage à action intégrale (160) de telle sorte que l'accumulation de l'organe de réglage à action intégrale (160) s'effectue sur la base des grandeurs de sortie du ou des organes de réglage (140, 144, 148) mentionnés précédemment.

36. Unité de réglage d'accord à logique floue selon la revendication 35, **caractérisée en ce que** le dispositif de suréchantillonnage (130) est branché en amont uniquement d'une sélection d'organes de réglage (140, 144), et notamment pas en amont des autres organes de réglage à action proportionnelle (148) et/ou à action différentielle.

37. Unité de réglage d'accord à logique floue selon l'une des revendications 33 à 36, **caractérisée par** un dispositif d'anti-sursaturation (166) pour l'organe de réglage à action intégrale (160) pour éviter une surmodulation de la section de régulation (6).

38. Unité de réglage d'accord à logique floue selon la revendication 37, **caractérisée en ce que** le dispositif d'anti-sursaturation (166) est agencé de telle sorte qu'il compare la valeur absolue de la grandeur de réglage du régulateur (4) à une valeur maximale prédéterminée pour la section à régler (6) et, dans le cas du dépassement, déduit la contribution de l'organe de réglage à action intégrale (160), de la grandeur de réglage et/ou annule la dernière accumulation de l'organe de réglage à action intégrale (160).

39. Unité de réglage d'accord à logique floue selon l'une des revendications 33 à 38, **caractérisée par** un dispositif de correction (150) servant à corriger la grandeur à régler envoyée à l'entrée du régulateur (4) et/ou la grandeur pilote.

**40.** Unité de réglage d'accord à logique floue selon la revendication 39, **caractérisée en ce que** le dispositif de correction (150) comprend un moyen de mémoire (156) pour mémoriser des données de correction, qui prennent en compte les imprécisions mécaniques de la section à régler (6).

**41.** Unité de réglage d'accord à logique floue selon l'une des revendications 33 à 40, **caractérisée par** des moyens (196) pour accroître la précision de la grandeur de réglage convertie par un convertisseur numérique/analogique branché en aval du régulateur (6).

**42.** Unité de réglage d'accord à logique floue selon la revendication 41, **caractérisée en ce que** les moyens (196) sont agencés de telle sorte qu'ils additionnent, à une suite de valeur d'échantillonnage de la grandeur de réglage, une suite de valeurs possédant une cadence supérieure à la cadence d'échantillonnage et envoie la suite ainsi obtenue au convertisseur numérique/ analogique branché en aval, auquel cas ils sélectionnent la suite de valeur de telle sorte que la suite de sortie du convertisseur numérique/analogique se rapproche en moyenne dans le temps, de la suite de valeurs d'échantillonnage de la grandeur de réglage.

**43.** Unité de réglage d'accord à logique floue selon l'une des revendications 33 à 42, **caractérisée par** des moyens (196) qui sont agencés de telle sorte qu'ils réduisent temporairement le paramètre ($K_V$) de l'organe de réglage à action différentielle (144) pendant l'intervalle de temps pendant lequel la grandeur à régler est essentiellement constante.

Fig. 1

**Fuzzy-Regler** 8

**Führungsgrößen-Verlaufgeber** 18

| Regelbasis 1 | $x \rightarrow T_1$ |
| 22 | $x \rightarrow T_s$ |
| | $x \rightarrow x_{max}$ |
| | $x \rightarrow T_{1\,fertig}$ |

| | $I \rightarrow$ Rauschwert |
| Regelbasis 2 | $I \rightarrow dI/dt_{max\,Bremsen}$ |
| 26 | $I \rightarrow I_{max\,Bremsen}$ |

2

CNC

Führungsgröße
(Position $x_0$)

10

20

16

Stellgröße
(Reglerparameter)

30

32

4

**PIV-Regler**

| P-Glied | V-Glied | I-Glied |

28

12

Stellgröße
(Strom I)

6

**Regelstrecke**

| Treiber-stufe | Antrieb |

24

Regelgröße
(Position x)

14

EP 0 786 708 B1

Lineare Bewegung

Fig. 2

Fig. 3

START —40

$K_P, K_V, K_I$

Führe einen Abstimmdurch-lauf für $K_P$ und $K_V$ aus —42

Leite physikalische Größen ab —44

Ermittle Korrektur-werte $dK_P$ und $dK_V$ —46

Korrekturwerte klein genug —48

Ja → Fertig —50

Nein

Korrigiere $K_P$ und $K_V$ mittels $dK_P$ und $dk_V$ —52

START —54

$K_P, K_V, K_I$

Führe einen Abstimmdurch-lauf für $K_I$ aus —56

Leite physikalische Größen ab —58

Ermittle Korrekturwert $dK_I$ —60

Korrekturwert klein genug —62

Ja → Fertig —64

Nein

Korrigiere $K_I$ mittels $dk_I$ —66

Fig. 4

Korrekturwerte
klein genug ? ⎯⎯ 68

$|dK_P|<0.05$ ⎯⎯ 70

Nein ◄⎯⎯

Ja

$|dK_V|<0.05$ ⎯⎯ 72

Nein ◄⎯⎯

Ja

$T_{1\,fertig}$ ? ⎯⎯ 74

Nein ◄⎯⎯

Ja

Durch-
läufe>30 ⎯⎯ 89     Ja ⎯⎯►  Ja

Nein

Stufe war.. ⎯⎯ 76

groß                klein

Durch-
läufe>30 ⎯⎯ 78

Durch-
läufe>30 ⎯⎯ 80

Ja                          Ja

$|dK_P|<0.09$

Nein ◄⎯⎯

⎯⎯ 82

Ja

Setze Verwerf-
Flag

⎯⎯ 88

$|dK_V|<0.09$ ⎯⎯ 84

Nein ◄⎯⎯                   Nein

86

Korrekturwerte
sind _nicht_
klein genug ⎯⎯ 90

Ja ⎯⎯►

Korrekturwerte
sind
klein genug

<u>Fig. 5</u>

Fig. 6

Position

Fig. 7

Position

Fig. 8

## Fig. 9

| Regelgröße |
| --- |
| $T_1$ |
| $T_S$ |
| $x_{max}$ |
| $T_{1\ fertig}$ |
| Rauschwert |

Regelba-sis 1 für $dK_P$   118

Regelba-sis 2 für $dK_P$   120   Korrekturwert $dK_P$

Regelba-sis 1 für $dK_V$   122

Regelba-sis 2 für $dK_V$   124   Korrekturwert $dK_V$

| Stellgröße |
| --- |
| $dI/dt_{max\ Bremsen}$ |
| $I_{max\ Bremsen}$ |

## Fig. 10

| Regelgröße |
| --- |
| $T_{S1}\ /\ T_{S2}$ |
| $T_{S2}$ |
| $max(x_{max1},\ x_{max2})$ |

Regelba-sis 3 für $dK_I$   126   Korrekturwert $dK_I$

Fig. 11

Ausgabe des
PID-Reglers

Sägezahn

+

=

13.7

Umwandlung von Fließkomma-Zahlen
in Integer-Zahlen

Ausgabe des
Digital-Analog-Wandlers

Durchschnittswert
≈ 13.75

Fig. 12